# EUROPEAN PATENT SPECIFICATION

(11) **EP 0 746 156 B1**
(45) Date of publication and mention of the grant of the patent: **13.03.2002**
(21) Application number: 96303715.5
(22) Date of filing: 24.05.1996
(51) Int. Cl.: H04N 5/926

(54) **Digital video data recording/reproducing method and apparatus therefor**
Verfahren und Anordnung zur Aufnahme / Wiedergabe digitaler Fernsehdaten
Procédé et appareil pour enregistrer/reproduire des données vidéo numériques

(30) Priority: 29.05.1995 KR 1368695
(43) Date of publication of application: 04.12.1996
(73) Proprietor: SAMSUNG ELECTRONICS CO., LTD., Suwon-City, Kyungki-do (KR)
(72) Inventor: Kim, Tae-eung, Suwon-city, Kyungki-do (KR)
(74) Representative: Chugg, David John

(56) References cited:
- EP-A- 0 615 240
- EP-A- 0 618 728
- EP-A- 0 644 691
- EP-A- 0 692 916
- WO-A-95/28061
- GOO MAN PARK ET AL: "PREDICTIVE CODER FOR DIGITAL VCR TRICK PLAY" PROCEEDINGS OF THE INTERNATIONAL CONFERENCE ON CONSUMER ELECTRONICS, ROSEMONT, JUNE 8 - 10, 1993, no. CONF. 12, 8 June 1993, INSTITUTE OF ELECTRICAL AND ELECTRONICS ENGINEERS, page 28/29 XP000427512
- SEUNG HO KIM ET AL: "AN ERROR-CONTROL CODING SCHEME FOR MULTISPEED PLAY OF DIGITAL VCR" IEEE TRANSACTIONS ON CIRCUITS AND SYSTEMS FOR VIDEO TECHNOLOGY, vol. 5, no. 3, 1 June 1995, pages 243-247, XP000517129

## Description

The present invention relates to a digital video data recording/reproducing method and apparatus therefor, for recording/reproducing an advanced television (ATV) or digital video broadcasting (DVB) signal, in which an error correction code (ECC) structure for trick-play data is the same as that of a standard definition (SD) signal and in which error correction is performed without an extra error-correction circuit for the trick-play data.

European Patent Application published under number 0644691 discloses a compressed television signal recording and reproducing apparatus in which the following steps are carried out during recording:-
(i) the coded television signal is input to a formatter;
(ii) intra-frame data from the coded television signal is selected;
(iii) the DC component of each block from the selected intra-frame data is extracted as secondary data;
(iv) the coded television signal input directly to the formatter is formatted to a specified track pattern with the secondary data;
(v) the formatted data from step (iv) has an error correction code added thereto; and
(vi) the error corrected formatted data is then further processed by a recording signal generator, and recorded to magnetic tape. and during reproduction:-
   (i) a reproduction signal is generated by processing the data reproduced from the tape;
   (ii) the processed data is decoded;
   (iii) the decoded, processed data is deformatted, and;
   (iv) the coded television signal and secondary data are output separately.

European Patent Application published under number 0615240 discloses the arrangement, before recording, of data packets in a transverse arrangement in which the first section a of the data packets of a group 1 to 5 of data packets is progressively recorded and subsequently the second section b of these packets, then the third section c etc. To facilitate a fast search, additional data packet (which may be copies of the already recorded data) are recorded in reserve sections.

An SD-VCR apparatus for recording/reproducing an SD signal, including NTSC, PAL and high-definition (HD) signals, uses the SD signal format. ATV-VCR and DVB-VCR apparatuses for recording/reproducing ATV and DVB signals using digital video tape have been developed, each having an MPEG-2 structure and adopting the SD-VCR recording format. Methods for arranging trick-play data, improving screen quality or reducing noise problem may also be adopted. Here, a DVB-VCR can record a plurality off programs on digital video tape compared with an ATV-VCR. Thus, the DVB-VCR has various transmission rates according to the data's screen characteristics.

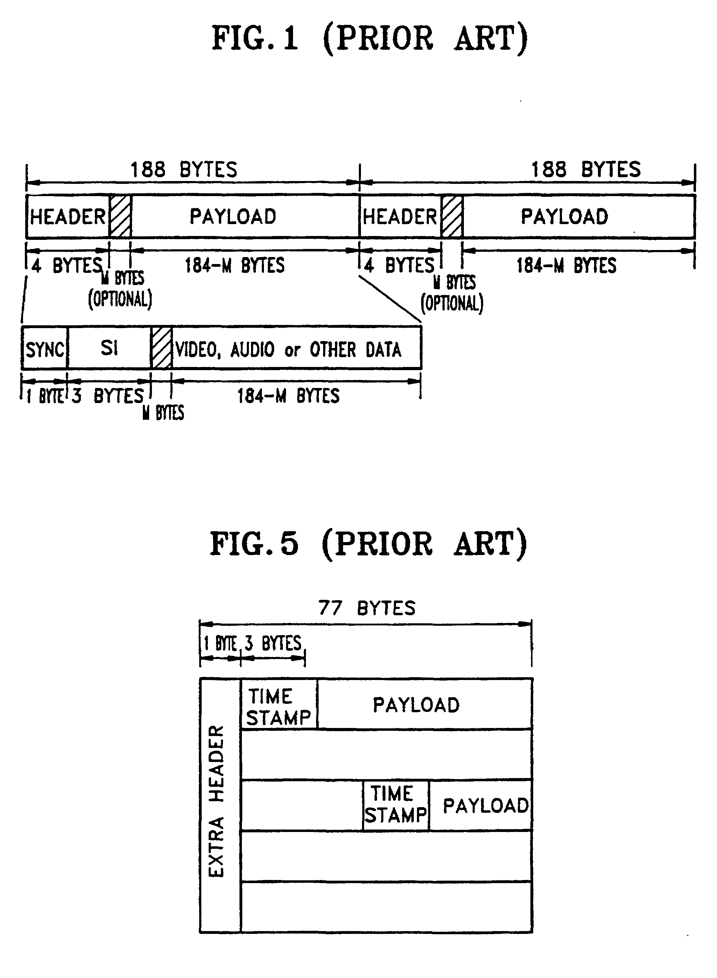

As shown in Figure 1, when an ATV or DVB signal is input to an ATV-VCR or DVB-VCR apparatus via some kind of transmission path, the signals are placed into a transport packet. That is, the data on the transmission path has the layer structure of an MPEG-2 system having a packet structure consisting of 188 bytes. In Figure 1, a 4-byte header is composed of 1-byte of sync data and 3-bytes of side information (SI) data. Here, the number of bytes in the header may vary. A packet payload includes audio/video data or user data. Here, the video data is compressed.

The SD signal is intra-frame coded data having an ECC structure. The ECC code is a two-dimensional modified Reed-Solomon code (RS code). That is, by convention, the data bytes are considered as being arrayed in rows and columns. In the row direction, the error correction code for an SD signal of digital video data is called an inner code of a type referred to as (85,8) code in which eight of the 85 bytes per row of digital video data are used for conveying row parity information, and in the column direction, it is called an outer code of a type referred to as (149,11) code in which eleven of the 149 bytes per column of digital video data are used for conveying column parity information.

During recording, after outer error-correction encoding is performed by appending eleven bytes of outer parity to a 138-byte outer code in the column direction, the inner error-correction encoding is performed by appending eight bytes of inner parity to a 77-byte inner code in the row direction. During reproducing, the inner error-correction decoding is first performed in the row direction. Here, after the error is corrected for a maximum of four bytes among 85 bytes, any uncorrected sync block has an error flag appended thereto. Then, the outer error-correction decoding is performed in the column direction for correcting uncorrected sync blocks up to a maximum of eleven bytes among 149 bytes, by using the error flag for identifying those sync blocks that are subject to correction.

Also, in the case of an SD signal, each frame consists of only intra frames, each frame being divided into five segments, and five macro blocks are constructed by collecting one macro block located in a predetermined position of each segment of the SD signal frame. The bit number per five macro blocks is fixed and is sequentially arranged in the scanning direction of the head to a video sector in units of the five macro blocks. As a result, the trick-play function can be achieved without an extra trick-play data region on the tape. Here, a transmission signal for recording constructs a DCT block arranged in eight rows and eight columns and forms the macro block by collecting a predetermined number (generally, four) of DCT blocks of luminance signals and a predetermined number (generally, two) of DCT blocks of chrominance signals, to thereby uniformly control the bit number of the codes variable-length-encoded in DCT block units by macroblock units.

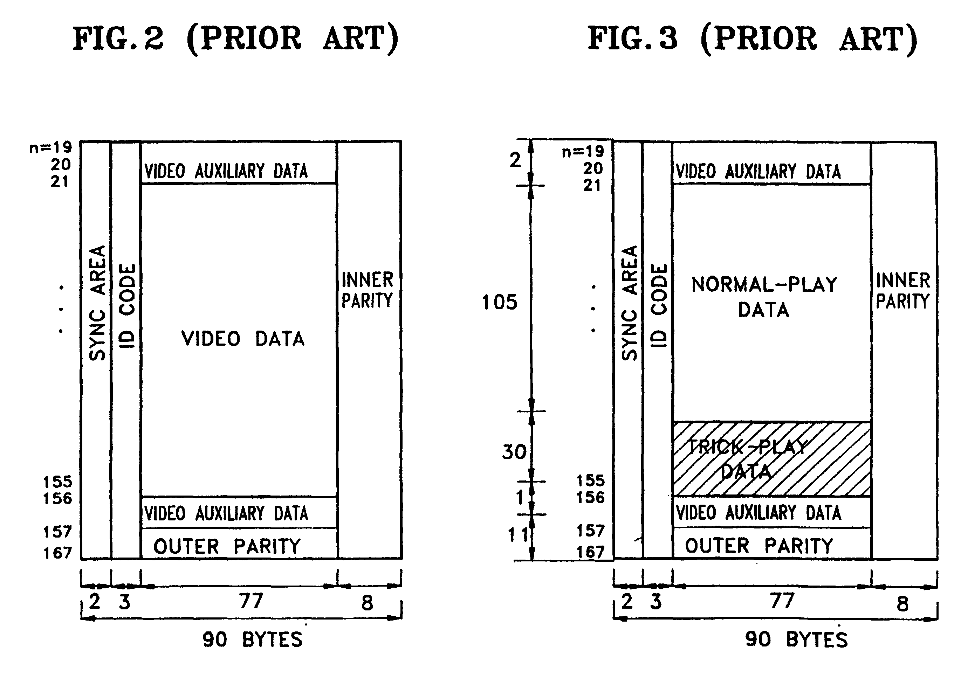

Figure 2 shows a signal format of a video sector supplied on the digital video tape having an SD-VCR recording format for recording.

As shown in Figure 2, the video sector on the digital video tape has the ECC structure. This SD-ECC structure is composed of the 19^{th} to 20^{th} sync blocks as a first video auxiliary data region, the 21^{st} to 155^{th} sync blocks as a video data region, the 156^{th} sync block as a second video auxiliary data region, and the 157^{th} to 167^{th} sync blocks as an outer parity region. Each sync block is composed of a 2-byte sync code, a 3-byte identification (ID) code, 77-byte data and an 8-byte inner parity suffix for the inner error-correction code.

On the other hand, the recording format of an ATV-VCR and a DVB-VCR has the ECC structure having the SD-VCR recording format as shown in Figure 2. However, the 22^{nd} to 155^{th} sync blocks of the video data region has a normal-play data region and a trick-play data region as shown in Figures 3 and 4.

In the ECC structure shown in Figure 3, there are the normal-play data region of the 21^{st} to 126^{th} sync blocks and the trick-play data region of the 127^{th} to 155^{th} sync blocks in the region corresponding to the video data region of the 21^{st} to 156^{th} sync blocks. In the ECC structure shown in Figure 3, using a method applied to the tape with the recording format in which the data of a pair of tracks (video data, audio data, etc.) is repeatedly recorded on tracks corresponding to twice the maximum multiple speed, the trick-play data region is arranged on a predetermined position of each track. With the Figure 3 recording method, since the tape scanning is performed within the repeat-recording region without precise servo control, implementation of a trick play function does not significantly increase the cost of the recorder/reproducer. However, a great deal of the recording region is consumed, owing to the repeated recording. Also, the frame rate is excessively slow at the lower multiple speeds, resulting in flicker and a jerking motion which cause eye fatigue and impaired picture quality.

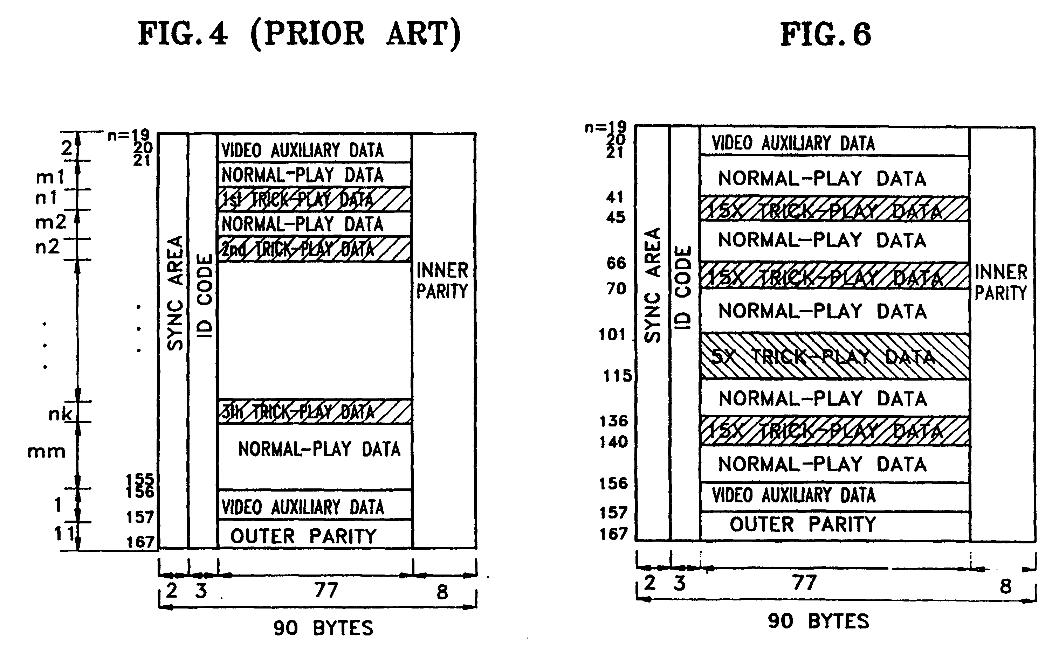

The ECC block structure shown in Figure 4 is applied to a tape having a recording format in which trick-play data are recorded on scanning regions corresponding to each of the multiple speeds. Also, k trick-play data regions are separately arranged on each track. The ECC block structure shown in Figure 4, corresponding to the video data region shown in Figure 2, is composed of a total of N(30) sync blocks within 1^{st} to k^{th} trick-play data regions and a total of M(105) sync blocks within 1^{st} to m^{th} normal-play data regions. With the Figure 4 method, the images reproduced during trick-play operation are excellent. However, since the corresponding regions of the arrangement for each trick-play speed have to be selectively scanned, the servo control has to be precise during trick-play operation, which increases costs.

According to Figures 3 and 4, the trick-play data region is composed of 30 sync blocks, but this structure may be varied. Recently, a research of the recording method compensating problems of the recording methods shown in Figures 3 and 4 has been performed.

On the other hand, the ATV and DVB signals are inter-frame coded signal having the MPEG-2 structure. Here, according to the inter-frame encoding, during the inter-frame encoding of other frames other than the intra-frame within each group of pictures (GOP) unit (fifteen frames maximum), only the differences between the adjacent frames are encoded.

Each GOP unit includes intra-frame data which can be independently coded without another screen data, predicted frame data which can be coded from the preceding intra-frame data or predicted frame data using motion compensation between adjacent frames, and bi-directional predicted frame data which can be coded from the preceding intra-frame data or predicted frame data and the following intra-frame data or predicted frame data using motion compensation.

Additionally, one picture (frame) for displaying the normal-play data is composed of a predetermined number (ATV:10, DVB:12) of tracks on a recording tape. Thus, the number of tracks needed for recording one GOP (i.e., fifteen pictures) is 150 for an ATV signal and 180 for a DVB signal.

Also, the data is input to transport packet of 188 bytes unit in the ATV-VCR and DVB-VCR. Here, a predetermined number of tracks compose one frame on the tape used in the ATV-VCR and DVB-VCR. Each track has the ECC structure having the recording format of SD-VCR as shown in Figure 3 or 4, and has 90-byte sync blocks in which each sync block composed of 90 bytes in the column direction. On this basis, the two transport packets are mapped into five sync blocks of 77 bytes as shown in Figure 5 in two transport packet unit and inner- and outer-error-correction-encoded and then recorded on the video sector of the digital video tape. Here, the mapping from two transport packets into five sync blocks is called as two-to-five mapping. Usually, a 1-byte extra header is appended to each sync block and a 3-byte time stamp indicating a point of decoding time is appended to each packet.

Here, as shown in Figures 3 and 4, in the ATV-VCR and DVB-VCR having the recording format of SD-ECC structure separately having the normal-play data region and trick-play data region, the error correction encoding step for appending outer and inner parities to trick play data and the decoding step for decoding the error-correction-encoded trick-play data are required.

To achieve the above need, there are suggested two methods. One is for error-correction-encoding and decoding the trick-play data having SD-ECC structure which is the same as that of the normal-play data. The other is for error-correction-encoding and decoding the trick-play data having another ECC structure instead of SD-ECC structure. If the trick-play data has an ECC structure different from the SD-ECC structure, there is required an additional complicated hardware for error-correcting the trick-play data.

Additionally, the hardware of an error-correction-decoding circuit is more complicated than that of the error-correction-encoding circuit. Also, if the error-correction encoding and -decoding circuits for the normal-play data, and another error-correction-encoding and - decoding circuits for the trick-play data are used, the hardware required therefor definitely increases.

According to the present invention, a method for error-correction-encoding and -decoding of normal-play data and trick-play data, both of which have an SD-ECC structure in the ATV-VCR and DVB-VCR, is suggested.

Also, it is suggested that two-to-five mapping is performed with respect to the trick-play data as well as the normal-play data.

If the two-to-five mapping is performed with respect not only to the normal-play data but also the trick-play data, there is required a hardware for assigning extra ID to each sync block of the trick-play data since the recording position of the trick-play data on the tape is different according to the multiple speed and the record arrangement method, and additional information caused by the ID increases.

Also, in order to provide compatibility between ATV-VCR and DVB-VCR having various transmission rates, when two-tofive mapping is performed with respect to the normal- and trick-play data, an extensible extra header of a predetermined bit is appended to each packet, differently from the conventional method in which an extra header of one byte is appended to each sync block.

Here, since the DVB signal further requires one byte of the sync block ID and bits indicating the transmission rate and program type, at least a 10-bit extra header is required. Thus, the conventional 1-byte extra header appended to each sync block is not enough so that the ATV-VCR and DVB-VCR cannot be compatible with each other.

It is an aim of embodiments of the present invention to provide a digital video data recording/reproducing method, in which an ATV or DVB signal is recorded/reproduced on/from a tape having the recording format of SD-VCR, for error-correction-encoding and error-correction-decoding trick-play data having an SD-ECC structure as well as normal-play data.

It is another aim of embodiments of the present invention to provide a digital video data recording/reproducing method for recording/reproducing trick-play data having SD-ECC structure as well as normal-play data on/from a normal-play data region and trick-play data region of the digital video tape in a reference unit.

It is still another aim to provide a digital video tape recording/reproducing method for recording/reproducing normal- and trick-play data in a block unit by constructing a reference block by mapping from five sync blocks into two transport packets by appending an extra header of a predetermined bit to each transport packet, so as to provide the compatibility between ATV-VCR and DVB-VCR.

It is yet another aim to provide a digital video tape recording/reproducing apparatus for error-correcting normal- and trick-play data using one error-correction-circuit according to a normal or trick mode without an additional error-correction-circuit for the trick-play data.

According to a first aspect of the invention, there is provided a method for recording digital video data generated responsive to an ATV or DVB signal which includes independently decodable frame data supplied at predetermined intervals and dependently decodable frame data supplied between said predetermined intervals, wherein said signal is classified into normal-play data and trick-play data, said method comprising the steps of:
(a) using independently decodable frame data supplied at predetermined intervals and dependently decodable frame data supplied between said predetermined intervals, which are transmitted with a transport packet, as the normal-play data;
(b) combining two of said transport packets and appending to each of said two transport packets header information including information representing a point of decoding time and information representing data type, trick mode, program ID and transmission bit rate, to form a reference block consisting of a predetermined number of sync blocks.
(c) extracting the trick-play data from independently decodable frame data supplied at predetermined intervals;
(d) formatting the normal-play data into the aforesaid reference block;
(e) arranging the normal-play data reference blocks formed in said step (d) in a predetermined data structure having a normal-play data region, a trick-play data region and a video auxiliary data region, and appending an outer parity thereto, independently with respect to the trick-play data of said trick-play data region;
(f) arranging said extracted trick-play data in said normal- and trick-play data regions, and appending a trick-outer parity thereto, independently with respect to the video auxiliary data of said video auxiliary data region;
(g) formatting said outer-error-correction-encoded trick-play data and trick-outer parity into said reference block;
(h) arranging said outer-error-correction-encoded normal- play data and the trick-play data reference block and trick-parity reference block formed in said step (g) in said normal- and trick-play data regions, and appending an inner parity thereto; and
(i) recording said inner-error-correction-encoded normal- and trick-play data on a predetermined position of each track on said tape in a reference block unit.

Preferably, one reference block in said steps (d) and (g) consists of five sync blocks.

Said information representing trick mode preferably include a toggle bit representing a corresponding transport packet of two transport packets and bits representing said trick-play data reference block ID and said trick-parity reference block ID.

Said trick-outer parity appended in said step (f) is preferably constructed in a reference block unit, and a predetermined data pattern is formed with respect to an empty sync block if the five sync blocks of each reference block are not completely filled with trick-parity.

Preferably, said normal-play data is outer-error-correction-encoded by replacing the trick-play data of said trick-play data region with a predetermined data pattern in said step (d), and the trick-play data is outer-error-correction-encoded by replacing the video auxiliary data of said video auxiliary data region with a predetermined data pattern in said step (f).

Preferably, said predetermined data pattern comprises a respective predetermined number of each byte in the pattern. The respective predetermined number of each byte in the pattern is preferably the same and may be arithmetic zero.

According to another aspect of the invention, there is provided a method for reproducing digital video data, wherein said digital video data is descriptive of an ATV or DVB signal that includes independently decodable frame data supplied at predetermined intervals and dependently decodable frame data supplied between said predetermined intervals which are transmitted with a transport packet, two of said transport packets are combined and have appended to each of said two transport packets header information including information representing a point of decoding time and information representing data type, trick mode, program ID and transmission bit rate, to form a reference block consisting of a predetermined number of sync blocks, said trick-play data is extracted from said independently decodable frame data supplied at predetermined intervals, said normal-play data is formatted in said reference block, arranged in normal-play data region of a predetermined data structure having regions for normal-play, trick-play and video auxiliary data and outer-error-correction-encoded exclusive of the trick-play data, said trick-play data is arranged in said normal- and trick-play data regions having said data structure, outer-error-correction-encoded exclusive of the video auxiliary data and then forms said reference block, and said outer-error-correction-encoded normal- and trick-play data are inner-error-correction-encoded and recorded on a predetermined position of the tape in said reference block unit, the method comprising the steps of:
(a') reproducing said inner-error-correction-encoded normal- and trick-play data recorded on said tape in said reference block unit;
(b') forming said reproduced normal- and trick-play data having said data structure and inner-error-correction-decoding said formed normal- and trick-play data;
(c') outer-error-correction-decoding said inner-error-correction-decoded normal-play data during normal mode by replacing the trick-play data of said trick-play data region with a predetermined data pattern;
(d') outputting said outer-error-correction-decoded normal-play data with a transport packet structure during said normal mode;
(e') arranging said inner-error-correction-decoded trick-play data in said normal- and trick-play data regions and outer-error-correction-decoding said inner-error-correction-decoded trick-play data during a trick mode by replacing the video auxiliary data of said video auxiliary data region with a predetermined data pattern; and
(f') outputting said outer-error-correction-decoded trick-play data with the transport packet structure during said trick mode.

Said predetermined data pattern preferably comprises a respective predetermined number of each byte in the pattern, in which the respective predetermined number of each byte in the pattern is preferably the same and preferably arithmetic zero.

According to a third aspect of the invention, there is provided a method for recording/reproducing digital video data that is generated responsive to an ATV or DVB signal including independently decodable frame data supplied at predetermined intervals and dependently decodable frame data supplied at between said predetermined intervals, said method comprising the steps of:
(a") using independently decodable frame data supplied at predetermined intervals and dependently decodable frame data supplied between said predetermined intervals, which are transmitted with a transport packet, as normal-play data;
(b") combining two of said transport packets and appending to each of said two transport packets header information including information representing a point of decoding time and information representing data type, trick mode, program ID and transmission bit rate, to form a reference block consisting of a predetermined number of sync blocks.
(c") extracting a trick-play data from independently decodable frame data supplied at predetermined intervals;
(d") formatting said normal-play data into the aforesaid reference block;
(e") arranging said normal-play data reference blocks formed in said step (d") in a predetermined data structure having normal-play data region, trick-play data region and video auxiliary data region, replacing the trick-play data of said trick-play data region with a predetermined data pattern, and appending an outer parity thereto, thereby performing outer error-correction encoding;
(f") arranging said extracted trick-play data in said normal- and trick-play data regions, replacing the video auxiliary data of said video auxiliary data region with a predetermined data pattern, and appending a trick-outer parity thereto, thereby performing outer error-correction-encoding;
(g") formatting said outer-error-correction-encoded trick-play data and trick-outer parity into said reference block unit;
(h") arranging said outer-error-correction-encoded normal play data and said formed trick-play data reference block and trick-parity reference block in said normal- and trick-play data regions, and appending an inner parity thereto, thereby performing inner error-correction-encoding;
(i") recording said inner-error-correction-encoded normal- and trick-play data on a predetermined position of each track on said tape in a reference block unit;
(j") reproducing said inner-error-correction-encoded normal- and trick-play data recorded on said tape in said reference block unit;
(k") forming said reproduced normal- and trick-play data having said data structure and inner-error-correction-decoding said formed normal- and trick-play data;
(l") outer-error-correction-decoding said inner-error-correction-decoded normal-play data during normal mode by replacing the trick-play data of said trick-play data region with a predetermined data pattern;
(m") outputting said outer-error-correction-decoded normal-play data with a transport packet structure during said normal mode;
(n") arranging said inner-error-correction-decoded trick-play data in said normal- and trick-play data regions and outer-error-correction-decoding said inner-error-correction-decoded trick-play data during a trick mode by replacing the video auxiliary data of said video auxiliary data region with a predetermined data pattern; and
(o") outputting said outer-error-correction-decoded trick-play data with the transport packet structure during said trick mode.

Preferably, one reference block in said steps (d") and (g") consists of five sync blocks.

Preferably, the respective predetermined number for each byte in the pattern is arithmetic zero.

According to another aspect of the invention, there is provided an apparatus for recording digital video data that is generated responsive to an ATV or DVB signal including independently decodable frame data supplied at predetermined intervals and dependently decodable frame data supplied between said predetermined intervals, wherein said signal is classified into normal-play data and trick-play data, said apparatus comprising:
first formatting means (102) for combining two of said transport packets and appending to each of said two transport packets header information including information representing a point of decoding time and information representing data type, trick mode, program ID and transmission bit rate, to form a reference block consisting of a predetermined number of sync blocks, and formatting said normal-play data into said reference block;
first outer error-correction encoding means (104) for arranging the normal-play data reference blocks formed in said first formatting means (102) in a predetermined data structure having a normal-play data region, a trick-play data region and a video auxiliary data region, and appending an outer parity thereto, independently with respect to the trick-play data of said trick-play data region;
extracting means (106, 108) for extracting the trick-play data from independently decodable frame data supplied in a predetermined interval;
second outer error-correction encoding means (110) for arranging said extracted trick-play data in said normal-and trick-play data regions, and appending a trick-outer parity thereto, independently with respect to the video auxiliary data of said video auxiliary data region;
second formatting means (112) for forming said outer-error-correction-encoded trick-play data and trick-outer parity into said reference block unit;
inner error-correction encoding means (116) for arranging said outer-error-correction-encoded normal-play data and the trick-play data reference block and trick-parity reference block formed in said second formatting means in said normal- and trick-play data regions, and appending an inner parity thereto; and
recording means (118) for recording said inner-error-correction-encoded normal- and trick-play data on a predetermined position of each track on said tape in a reference block unit.

According to still another aspect of the invention, there is provided an apparatus for reproducing digital video data, wherein said digital video data is descriptive of an ATV or DVB signal that includes independently decodable frame data supplied at predetermined intervals and dependently decodable frame data supplied between said predetermined intervals, said normal-play data corresponds to said independently decodable frame data supplied at predetermined intervals and said dependently decodable frame data supplied between said predetermined intervals, which are transmitted with a transport packet, two of said transport packets are combined and have appended to each of said two transport packets header information including information representing a point of decoding time and information representing data type, trick mode, program ID and transmission bit rate, to form a reference block consisting of a predetermined number of sync blocks, said trick-play data is a type as extracted from said independently decodable frame data supplied in predetermined intervals, said normal-play data is formatted in said reference block, arranged in the normal-play data region of a predetermined data structure having regions for normal-play, trick-play and video auxiliary data and outer-error-correction-encoded exclusive of the trick-play data, said trick-play data is arranged in said normal- and trick-play data regions having said data structure, outer-error-correction-encoded exclusive of the video auxiliary data and then forms said reference block, and said outer-error-correction encoded normal- and trick-play data are inner-error-correction-encoded and recorded on a predetermined position of the tape in said reference block, said apparatus comprising:
reproducing means (202) for reproducing said inner-error-correction-encoded normal- and trick-play data recorded on said tape in said reference block unit;
inner error-correction decoding means (204) for forming said reproduced normal- and trick-play data and inner-error-correction-decoding said formed normal- and trick-play data;
outer error-correction decoding means (212) for outer-error-correction-decoding said inner-error-correction-decoded normal-play data during normal mode by replacing the trick-play data of said trick-play data region with a predetermined data pattern, and for arranging said inner-error-correction-decoded trick-play data in said normal-and trick-play data regions and then outer-error-correction-decoding said inner-error-correction-decoded trick-play data during a trick mode by replacing the video auxiliary data of said video auxiliary data region with a predetermined data pattern; and
deformatting means (218) for outputting said outer-error-correction-decoded normal-play data with a transport packet structure during said normal mode, and for outputting said outer-error-correction-decoded trick-play data with the transport packet structure during said trick mode.

According to yet still another aspect of the invention, there is provided an apparatus for recording/reproducing digital video data that is generated responsive to an ATV or DVB signal including independently decodable frame data supplied at predetermined intervals and dependently decodable frame data supplied between said predetermined intervals, wherein said signal is classified into normal-play data and trick-play data, said apparatus comprising:
first formatting means (102) for combining two of said transport packets and appending to each of said two transport packets header information including information representing a point of decoding time and information representing data type, trick mode, program ID and transmission bit rate, to form a reference block consisting of a predetermined number of sync blocks and formatting said normal-play data into said reference block;
first outer error-correction encoding means (104) for arranging the normal-play data reference blocks formed in said first formatting means (102) in a predetermined data structure having a normal-play data region, a trick-play data region and a video auxiliary data region and appending an outer parity thereto, independently with respect to the trick-play data of said trick-play data region;
extracting means (106, 108) for extracting the trick-play data from independently decodable frame data supplied at predetermined intervals;
second outer error-correction encoding means (110) for arranging said extracted trick-play data in said normal-and trick-play data regions having said data structure and appending a trick-outer parity thereto, independently with respect to the video auxiliary data of said video auxiliary data region;
second formatting means (112) for formatting said outer-error-correction-encoded trick-play data and trick-outer parity into said reference block unit;
inner error-correction encoding means (116) for arranging said outer-error-correction-encoded normal-play data and the trick-play data reference block and trick-parity reference block formed in said second formatting means in said normal- and trick-play data regions, and appending an inner parity thereto;
recording means (118) for recording said inner-error-correction-encoded normal- and trick-play data on a predetermined position of each track on said tape in said reference block unit;
reproducing means (202) for reproducing said inner-error-correction-encoded normal- and trick-play data recorded on said tape in said reference block unit;
inner error-correction decoding means (204) for forming said reproduced normal- and trick-play data having said data structure and inner-error-correction-decoding said formed normal- and trick-play data;
outer error-correction decoding means (212) for outer-error-correction-decoding said inner-error-correction-decoded normal-play data during normal mode by replacing the trick-play data of said trick-play data region with a predetermined data pattern, and for arranging said inner-error-correction-decoded trick-play data in said normal-and trick-play data regions and then outer-error-correction-decoding said inner-error-correction-decoded trick-play data during a trick mode by replacing the video auxiliary data of said video auxiliary data region with a predetermined data pattern; and
deformatting means (218) for outputting said outer-error-correction-decoded normal-play data with a transport packet structure during said normal mode, and for outputting said outer-error-correction-decoded trick-play data with the transport packet structure during said trick mode.

In accordance with preferred embodiments of an aspect of the invention, the following digital video data recording/reproducing method is provided. An extensible extra header is appended to each transport packet when mapping two transport packets into five sync blocks. The normal-play data reference block is mapped in the normal-play data region of the video sector of each track and the trick-play data reference block or trick-parity reference block is mapped in the trick-play data region, by using five sync blocks as reference block. That is, normal- and trick-play data are extracted from the signal transmitted with a transport packet structure. The extracted normal-play data is mapped into five sync blocks for every two transport packets and is outer-error-correction-encoded exclusive of the trick-play data. The extracted trick-play data is then arranged in a video data region having the SD-ECC structure and is outer-error-correction-encoded exclusive of the video auxiliary data and then mapped into a five-sync-block unit. The outer-error-correction-encoded normal- and trick-play data are rearranged in a normal-play data region and a trick-play data region corresponding to the video data region having the SD-ECC structure and then inner-error-correction-encoded.

During reproducing, the inner-error-correction-encoded normal- and trick-play data are inner-error-correction-decoded, the normal-play data is outer-error-correction-decoded exclusive of the trick-play data during a normal mode and the inner-error-correction decoded trick-play data is outer-error-correction-decoded exclusive of the video auxiliary data during a trick mode, after being arranged in the video data region.

For a better understanding of the invention, and to show how embodiments of the same may be carried into effect, reference will now be made, by way of example, to the accompanying diagrammatic drawings, in which:
Figure 1 is a diagram for illustrating an MPEG-2 transport packet structure;
Figure 2 is a diagram for illustrating a signal format of a video sector supplied on the digital video tape having an SD-VCR recording format for recording;
Figures 3 and 4 are diagrams for illustrating the arrangement of the trick-play data of a video sector supplied on digital video tape having an SD-VCR format for recording;
Figure 5 is a diagram for illustrating two-to-five mapping, in which two transport packets are mapped into five sync blocks;
Figure 6 is a diagram for illustrating a signal format of a video sector supplied on digital video tape having an SD-VCR recording format for recording according to an embodiment of the present invention;

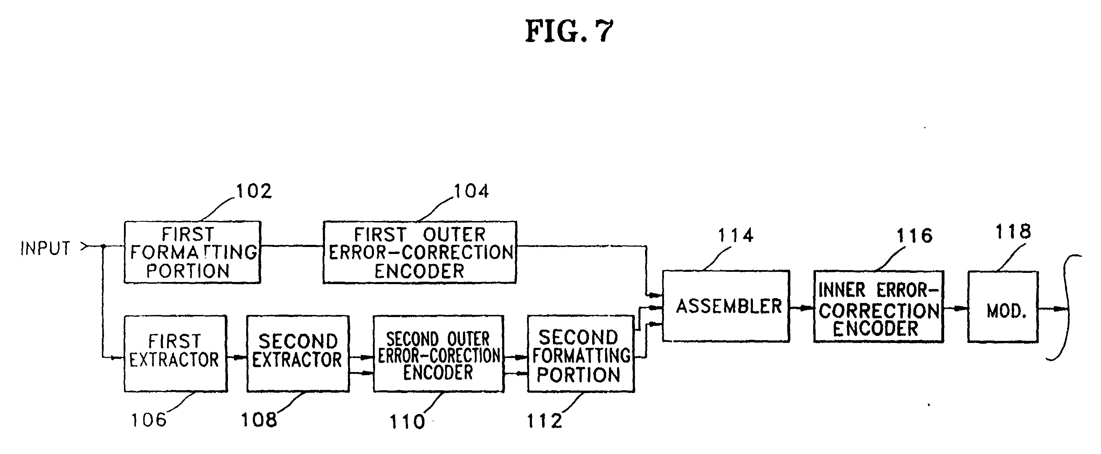

Figure 7 is a block diagram of a digital video data recorder according to a preferred embodiment of the present invention;

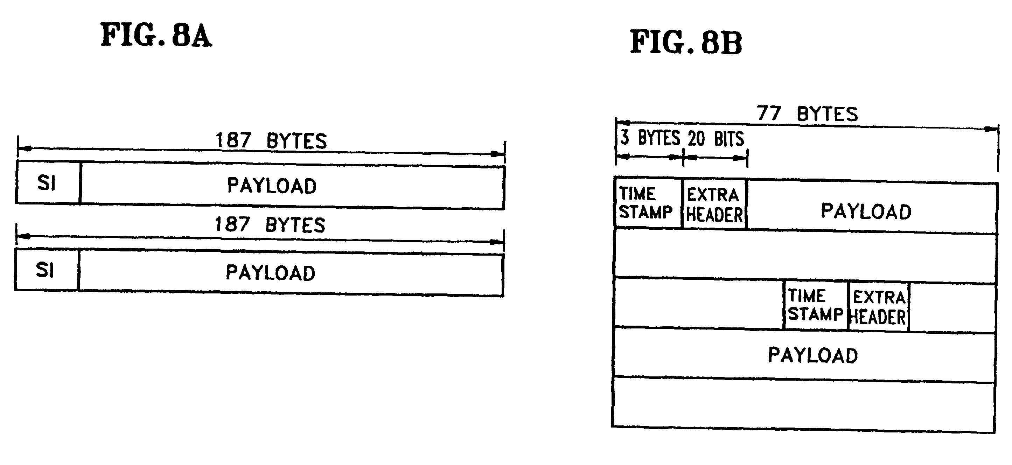

Figures 8A and 8B are diagrams for illustrating a two-to-five mapping performed by the first and second formatting portions shown in Figure 7;

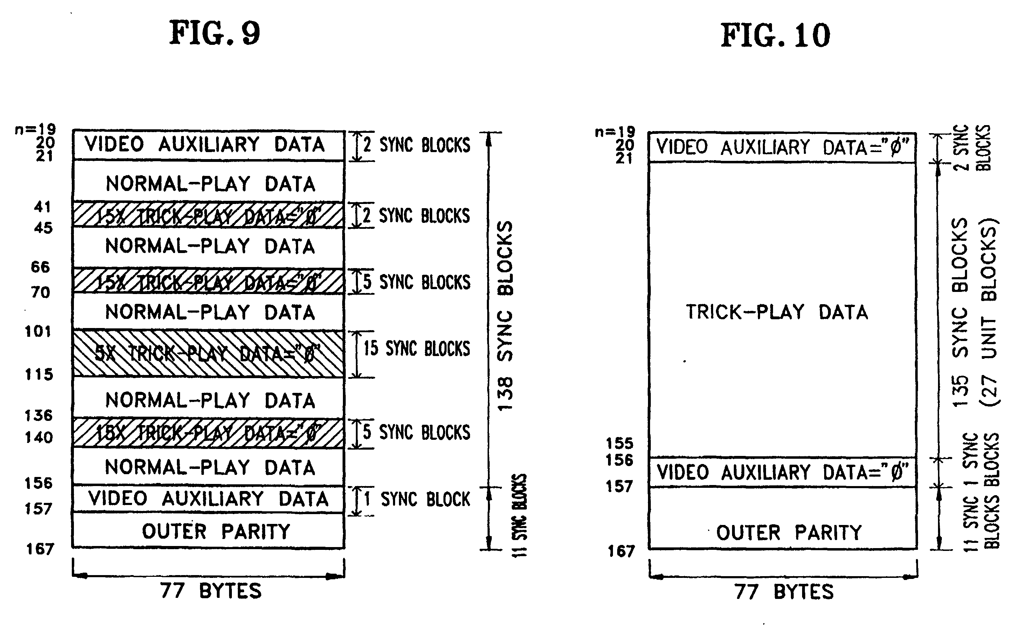

Figure 9 is a diagram for illustrating the outer error-correction encoding performed by the first outer error-correction encoder shown in Figure 7;
Figure 10 is a diagram for illustrating the outer error- correction encoding performed by the second outer error- correction encoder shown in Figure 7;

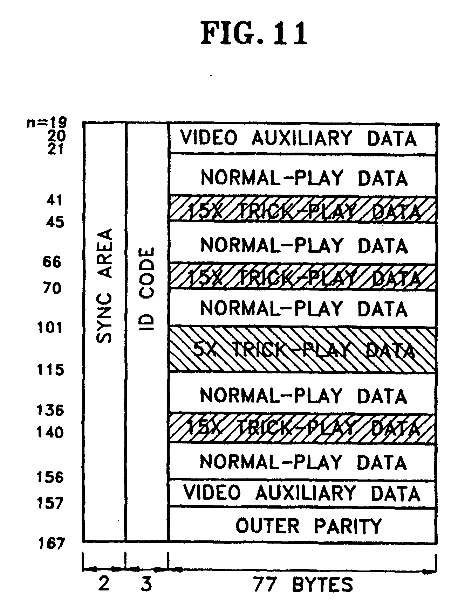

Figure 11 is a diagram showing the result of assembling performed by the assembler shown in Figure 7;

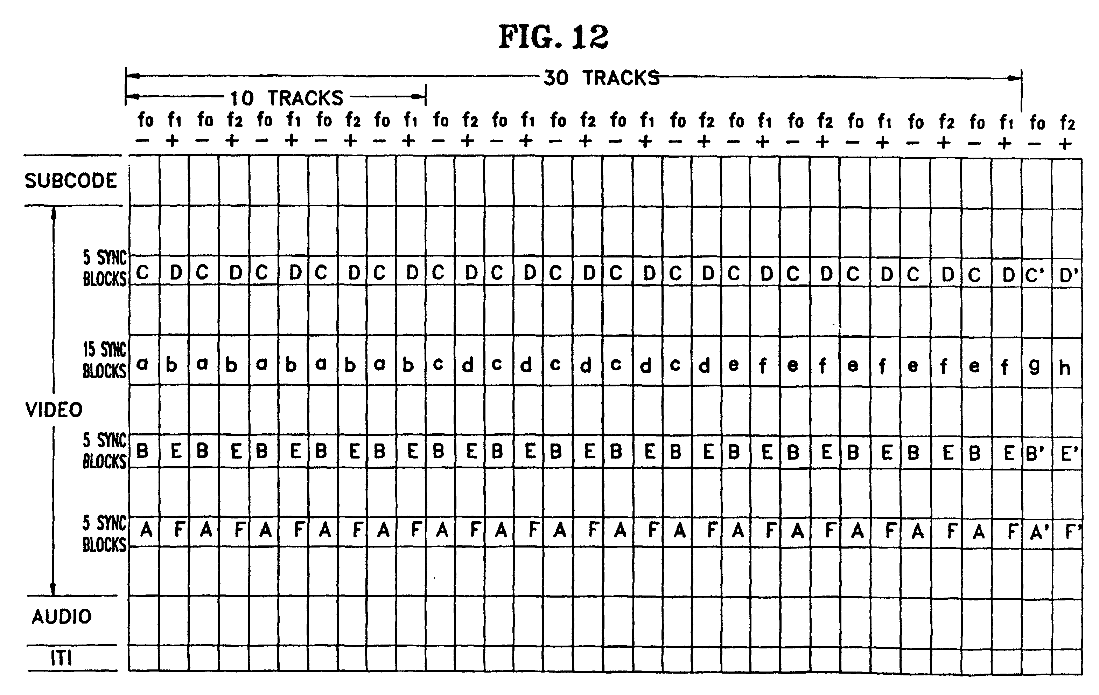

Figure 12 is a diagram for illustrating the track structure of the digital video tape having SD-VCR recording format according to embodiments of the present invention; and

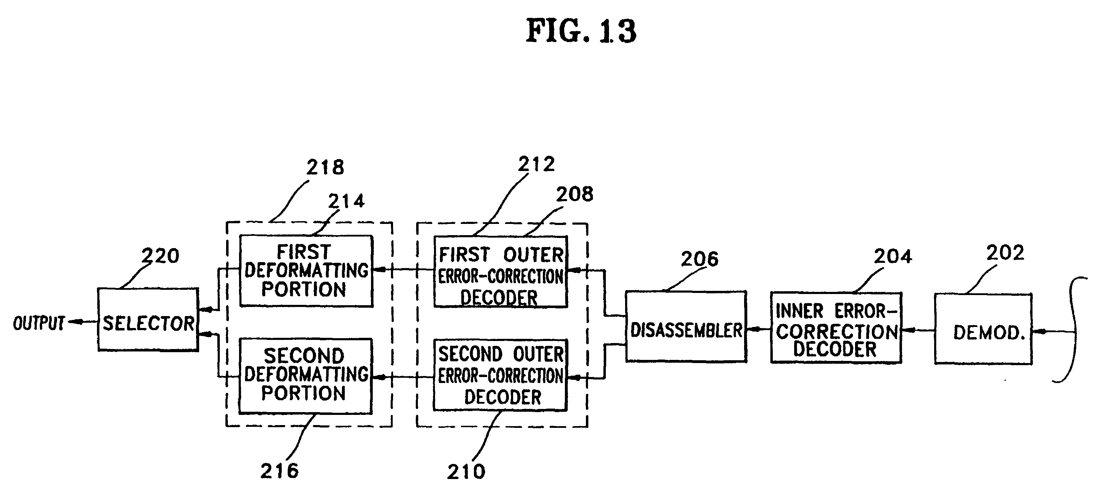

Figure 13 is a block diagram of a digital video data reproducer according to a preferred embodiment of the present invention.

The ECC structure shown in Figure 6 is a modified example obtained by combining the ECC structure shown in Figures 3 and 4. In Figure 6, in the video data region of the 21^{st} to 156^{th} sync blocks, the trick-play data of five-times speed are recorded on a total of fifteen sync blocks within the 101^{st} to 115^{th} sync blocks, and the trick-play data of fifteen-times speed are separately recorded on 41^{st} to 45^{th}, 66^{th} to 70^{th} and 136^{th} to 140^{th} sync blocks, and the normal-play data are recorded on the remaining region. The arrangement of the trick-play data is the result of an experiment and can be changed according to the multiple speed.

The present invention can be applied to the ECC structure in which the normal- and trick-play data regions are composed of the sync blocks of multiples of five as well as the ECC structure shown in Figures 3 and 4. Also, the present invention can be applied to both ATV-VCR and DVB-VCR.

Also, the picture quality is best during the normal-play mode. As 15× trick-play speed is faster than 5× trick-play speed, increased flicker rate on a timing domain during 15× trick-play can result in less eye fatigue. Thus, the picture quality during 15× trick-play mode is better than that of 5× trick-play mode.

Figure 7 is a block diagram of a digital video data recorder according to a preferred embodiment of the present invention.

In Figure 7, the signal input to a first formatting portion 102 and a first extractor 106 is an ATV or DVB signal transmitted with the MPEG-2 transport packet structure.

First formatting portion 102 separates 1-byte sync data from the MPEG-2 video data of a 188-byte packet, combines two 187-byte packets as shown in Figure 8A, and forms five sync blocks as shown in Figure 8B. Here, the separation of 1-byte sync is for obtaining a more efficient data region which may be changed into unnecessary data as the sync data for a packet for the recording process since an assembler 114 appends sync and ID data to each sync block.

As shown in Figure 8B, five 77-byte sync blocks are composed of head information appended to each transport packet and two 187-byte transport packets.

Here, head information consists of a 3-byte time stamp and 20-bit extra header. In the 20-bit extra header, there are two bits for representing data type, six bits for representing trick mode, two bits for representing program ID and two bits for representing transmission bit rate. The remaining eight bits are reserved.

Here, the time stamp is information representing a point of decoding time during the decoding process and two bits for representing data type represents whether the data is a normal-play data, trick-play data (five-times speed data, fifteen-times speed data, etc) or dummy data. Also, six bits for the trick mode consists of 1-bit toggle flag representing a corresponding packet of two packets and 5-bit flag representing ID of the trick-play data reference block or trick-parity reference block. Two bits for transmission bit rate indicate one of 25Mbps, 12.5Mbps and 6.25Mbps. Here, if the transmission bit rate of 25Mbps is selected, only one program having distinct picture quality is recorded on the tape. However, if the transmission bit rate of 6.25Mbps is selected, four programs whose picture quality is inferior to that of 25Mbps transmission bit rate can be recorded. Thus, two bits for representing program ID indicate a corresponding program among a plurality of programs (four maximum) determined according to the transmission bit rate. As described above, since the DVB-VCR, in which the transmission can be performed with various transmission bit rates according to picture quality, requires an extra bit for selecting the transmission bit rate and program, a 1-byte extra header for each sync block as shown in Figure 5 is not enough. Thus, first and second formatting portions 102 and 112 of the present invention appends a 20-bit extra header to each packet during the two-to-five mapping process as shown in Figures 8A and 8B.

A first outer error-correction encoder 104 outer-error-correction-encodes the normal-play data supplied from first formatting portion 102 in a reference block unit including five sync blocks. That is, in order to follow the data sync structure of the SD-VCR video sector, in the SD-ECC structure as shown in Figure 9, the normal-play data transmitted from first formatting portion 102 in a reference block unit are written on the normal-play data region, and the video auxiliary data provided from a servo system controller (not shown) are written on first and second video auxiliary data regions. Also, in the trick-play data regions of the five-times speed and fifteen-times speed, the data of arithmetic zeros or a predetermined pattern are written and 11-sync block outer parity is appended in the column direction.

Here, since the bytes of a predetermined pattern data are composed of eight bits, the data can be set as a binary value ranging from 0000 0000 (zero) to 1111 1111 in 8-dimensional bit space, but it is preferable that the data pattern is set as a pattern of all arithmetic zeroes for simplifying the circuitry.

A first extractor 106 extracts the intra-frame data from the transmitted MPEG-2 video data (intra-, predicted-and bi-directional-frames).

That is, first extractor 106 extracts the transmitted MPEG-2 video data stream with reference to the packet ID (PID) of a packet header and extracts the intra-frame data by 3-bit code which presents a picture coding type, i.e., an intra (I), predicted (P) or bi-directional (B) picture, and which locates the next ten bits after the picture start code (PSC).

A second extractor 108 extracts predetermined number of coefficients, that is, a DC coefficient and AC coefficients having only low frequency components, from the extracted intra-frame data of each DCT block without omission of any DCT block, and outputs 5× trick-play data and 15× trick-play data which have different number of coefficients. Here, the number of DCT coefficients of 15× trick-play data is less than that of 5× trick-play data.

A second outer error-correction encoder 110 arranges the trick-play data provided from second extractor 108 in the video data region of SD-ECC structure and then appends 11-sync block outer parity. That is, second outer error-correction encoder 110 appends independently outer parity with respect to 5× trick-play data and 15× trick-play data.

The reason why the ECC structure of the trick-play data coincides with the SD-ECC structure is for error-correction-decoding the normal- and trick-play data using one ECC circuit without any additional hardware for the trick-play data having the ECC structure.

Thus, as shown in Figure 10, the trick-play data provided from second extractor 108 is recorded on the video data regions including the 21^{st} to 155^{th} sync blocks, and all arithmetic zeroes or predetermined pattern data is recorded on the first and second video auxiliary data regions. Then, 11-sync block outer parity is appended to the data of the first and second video auxiliary data regions replaced with all arithmetic zeroes or predetermined pattern data and to the trick-play data (135 sync blocks). Also, second outer error-correction encoder 110 needs a pair of buffers having the size of a track, as shown in Figure 10, so as to append independently the outer parity with respect to 5× trick-play data and 15× trick-play data. Here, the buffer is composed of a RAM.

In order to map the trick parity and trick-play data into five sync blocks, second formatting portion 112 formats the trick-play data of 135 sync blocks (three sync blocks of first and second video auxiliary data regions are excluded), which are provided from second outer error-correction encoder 110 into 27 trick-play data reference blocks each of which includes five sync blocks, and formats 11-sync block trick outer parity into three trick-parity reference blocks, and then performs the formatting by receiving the time stamp and extra header as shown in Figure 8B. Here, in one of three trick-parity reference blocks, there is the trick-outer parity of only one sync block, and the remaining four sync blocks are reserved while being filled with the dummy data of arithmetic zeroes. In the remaining two trick-parity reference blocks, there is the trick-outer parity of ten sync blocks.

Also, each reference block ID of 27 trick-play data reference blocks is set in a range from 00000 (zero) to 11010 and each reference block ID of three trick-parity reference blocks is set in a range from 11011 to 11101.

In addition, the time stamp for the trick-play data, which is appended independent of trick-play speed when two-to-five mapping, is different from that for the normal-play data regardless of the speed. The time stamp for the trick-play data includes a program clock reference (PCR) which is set to "0" every intra picture and a presentation time stamp (PTS) which is set to the constant value every intra picture. However, the time stamp for the trick-play data does not include a decoder time stamp (DTS).

Additionally, the time stamp for the normal trick-play data includes the PCR, PTS and DTS each of which are reset to "0" every intra picture and are varied the value till next intra picture. For a better general picture of what is happening here, there are provided the following tables.

| NORMAL PLAY | | | | | | | | |
|---|---|---|---|---|---|---|---|---|
| Time | 0 | 1/30 | 2/30 | 3/30 | 4/30 | 5/30 | 6/30 | . . . |
| Display sequence | I | B | B | P | B | B | P | . . . |
| Decoding sequence | I | P | B | B | P | B | B | . . . |
| PCR | 0 | 100 | 200 | 300 | 400 | 500 | 600 | . . . |
| PTS | 0 | 300 | 100 | 200 | 600 | 400 | 500 | . . . |
| DTS | 0 | 100 | 200 | 300 | 400 | 500 | 600 | . . . |

| TRICK-PLAY | | | | |
|---|---|---|---|---|
| Time | 0 | 15/30 | 30/30 | 45/30 |
| display sequence | I | I | I | I |
| decoding sequence | I | I | I | I |
| PCR | 0 | 0 | 0 | 0 |
| PTS | 100 | 100 | 100 | 100 |

Also, second formatting portion 112 includes at least of one pair of buffers having a minimum size of five sync blocks with respect to 5× trick-play and 15× trick-play data respectively, so as to format 5× and 15× trick-play data independently. Here again, the buffer is composed of a RAM alternately written and read.

Here, the normal-play data is made of all pictures within one GOP, while on the other hand, the trick-play data is made up of only intra picture data within the GOP, using a predetermined number of DCT coefficients. As result, the loading of data can be completed within the time period for second outer error-correction encoder 110 to supply its outer parity calculation of trick-play data, so that writing and reading of the buffer in second formatting portion 112 can be performed at non-overlapping times.

In assembler 114, the outer-error-correction-encoded normal-play data supplied from first outer error-correction encoder 104 are arranged in the normal-play data region having SD-ECC structure, the trick-play data reference block or trick-parity reference block supplied from second formatting portion 112 is arranged in the trick-play data region having SD-ECC structure, and then 2-byte sync data and 3-byte ID data are appended thereto. Here, the 2-byte sync data and 3-byte ID data may be appended before outer error-correction-encoding or after inner error-correction-encoding.

The assembler 114 needs a buffer having the size of a track of SD-ECC structure, so as to assemble the normal and the trick-play data as shown in Figure 11, and address counters which count for the normal-play mode and the trick-play mode, respectively.

An inner error-correction encoder 116 appends 8-byte inner parity to each of 149 sync blocks as shown in Figure 6 by receiving the data assembled with SD-ECC structure as shown in Figure 11.

As known, a modulator 118 performs 24-to-25 modulation and may interleave the error-correction encoded data to correct the error, and particularly, to convert the burst error to randomly occurring isolated errors.

During 24-to-25 modulation, the inner-error-correction encoded 24-bit digital data in inner error-correction encoder 116 are converted into the two-channel 25-bit digital data by affixing a "0" or a "1" to the prefix of 24-bit digital data. The two-channel 25-bit digital data is then interleave-NRZI-modulated. Thereafter, one of two-channel 25-bit data affixed with a "0" or a "1", which has an intended frequency spectrum, is selected and the selected one is recorded on the video sector of the digital video tape.

Figure 12 is a diagram for illustrating the track structure of the digital video tape having SD-VCR recording format according to the present invention.

In Figure 12, the horizontal direction represents the tape travelling direction and the vertical direction represents the head travelling direction. The serial numbers of sync blocks are assigned along the head travelling direction. That is, No. 1 is assigned to the sync block from which the head travelling is started and the sync block numbers serially increase along the head travelling direction. Each track is classified in a sequence of head scanning; that is, an inserted and track information (ITI) sector on which track information is recorded, an audio sector, a video sector and a subcode sector.

Also, the track having a negative azimuth angle has an f₀ frequency characteristic and the track having a positive azimuth angle has alternating f₁ and f₂ frequency characteristics. Here, f₀, f₁ and f₂ are frequencies set for frequency tracking.

According to the recording method using the format shown in Figure 12, the trick-play data are separately recorded on a first track pair consisting of a predetermined first track and a second track which is adjacent to the first track toward the tape proceeding direction. The trick-play data recorded on the first track pair are repeatedly recorded on the tracks adjacent to the first track pair toward the tape proceeding direction as the same pattern. Here, the number of track pairs on which the trick-play data are repeatedly recorded corresponds to the multiple of trick-play speed. Thus, since the number of track pairs on which the trick-play data are repeatedly recorded should be an integer, the multiple speed number is limited as an integer. Also, since the trick-play data are separately recorded on successive track pairs, the speed multiple should be an odd integer for adjusting head phase during the trick reproducing process.

As an example, the five-times speed trick-play data region located at the center of each track is experimentally arranged in a region which is commonly scanned by the opposing heads and the pair of heads which are adjacent to each other when the head travels at the multiple speed corresponding to five-times speed trick-play data. Thus, a pair of tracks on which five-times speed trick-play data (or trick-parity) different for each track, are recorded is repeated five times so that the trick-play data is recorded on a total of ten tracks. Also, a pair of tracks on which fifteen-times speed trick-play data, different for each track, are recorded is repeated fifteen times so that the trick-play data are separately recorded on a total of thirty tracks.

In the recording format shown in Figure 12, obtained by combining the formats shown in Figures 3 and 4, a plurality of trick-play data regions corresponding to the scanning positions according to the multiple speeds are in each track, and a track pair consisting of two adjacent tracks on which the trick-play data (different from each other) are recorded is repeated as track number corresponding to each multiple speed. As a result, a precise servo control is not necessary so that the additional hardware requirement is decreased.

The recording format shown in Figure 12 as a preferred embodiment may be variously modified.

Figure 13 is a block diagram of a digital video data reproducer according to a preferred embodiment of the present invention.

In Figure 13, a demodulator 202 demodulates 24-to-25-modulated data. Also, an inverse ECC block arranger for arranging the modulated data as the ECC structure after deinterleaving thereof (assuming the modulated data is the interleaved data) may be constructed.

An inner error-correction decoder 204 inter-error-correction-decodes the modulated normal- and trick-play data. Maximum four bytes with respect to one sync block of 85 bytes are error-corrected in a row unit, and an error flag is appended to each uncorrected sync block. In the case of two-dimensional RS code, the bytes corresponding to half the inner parity can be inner-error-corrected, and the bytes corresponding to the byte number of outer parity can be outer-error-corrected, due to the error flag signal indicating error position.

A disassembler 206 separates 2-byte sync-code and 3-byte ID code from the inner-error-correction-decoded normal- and trick-play data, and separates the normal- and trick-play data according to the normal or trick mode.

A first outer error-correction decoder 208 outer-error-correction-decodes the normal-play data by replacing the data of the trick-play region with all arithmetic zeroes or predetermined pattern data used during the outer error-correction-encoding, during the normal mode.

A first deformatting portion 214 receives the normal-play data supplied from first outer error-correction decoder 208 in five 77-byte sync block units and separates the time stamp and the extra header, to thereby construct two 187-byte transport packets. Also, 1-byte packet sync data is appended to each packet so that a 188-byte transport packet is transmitted to a selector 220.

A second outer error-correction decoder 210 arranges the trick-play data supplied from disassembler 206 in the video data region having SD-ECC structure during the trick mode, and outer-error-correction-decoding the trick-play data by replacing the data of the first and second video auxiliary data region, used during the outer error-correction encoding, with all arithmetic zeroes or predetermined pattern data.

Also, second outer error-correction decoder 210 includes a rearranger for arranging the inner error-correction decoded 5× or 15× trick-play data and trick-play parity reference blocks in an SD-ECC structure using the 5-bit flag representing the ID of the trick-play data reference block or trick-play parity reference block, according to a 5× or 15× trick-play mode.

If the reference block counted by the address counter during the trick-play mode is the last trick-play parity reference block, only the first sync block thereof is arranged in the 167^{th} sync block of the SD-ECC structure.

The trick-play data is arranged by SD-ECC structure in the rearranger, because the trick-play data can be reproduced in duplicate due to repetitious recording according to the trick-play speed. Thus, second outer error-correction decoder 210 is composed of a pair of RAMs having the size of a track of SD-ECC structure, and the address counters.

Here, since portions of the structure of each first and second outer error-correction decoders 208 and 210 constituting outer error-correction-encoder 212 is the same as each other, first and second outer error-correction decoders 208 and 210 can be shared. For the convenience of description, however, first and second outer error-correction decoders 208 and 210 are separately designated. Here, since the structure of first and second outer error-correction decoders 208 and 210 is more complicated than that of first and second outer error-correction encoders 104 and 110, if first and second outer error-correction decoders 208 and 210 are not shared, the hardware capacity should be significantly increased.

A second deformatting portion 216 constructs two 187-byte transport packets from the outer-error-correction-decoded trick-play data of a reference block unit supplied from second outer error-correction decoder 210, and appends 1-byte packet sync data to each packet. As a result, a 188-byte packet is transmitted to selector 220. Here, first and second deformatting portions 214 and 216 of a deformatting portion 218 can be shared due to the redundant structure thereof.

Selector 220 selects the outer-error-correction-decoded normal- or trick-play data transmitted from first or second deformatting portion 214 or 216 according to the normal or trick mode, and transmits the selected data.

As described above, according to embodiments of the present invention, the trick-play data having the SD-ECC structure, like the normal-play data, is mapped in the trick-play data region by using five sync blocks as reference block, so that one ECC circuit is used regardless of mode, without an additional ECC circuit for the trick-play data, to thereby decrease the hardware requirement.

Also, according to embodiments of the present invention, the ATV-VCR and DVB-VCR can be made compatible with each other by appending an extensible extra header to each transport packet when mapping two transport packets into five sync blocks.

## Claims

1. A method for recording digital video data generated responsive to an ATV or DVB signal which includes independently decodable frame data supplied at predetermined intervals and dependently decodable frame data supplied between said predetermined intervals, wherein said digital video data are classified into normal-play data and trick-play data, said method comprising the steps of:
(a) using independently decodable frame data supplied at predetermined intervals and dependently decodable frame data supplied between said predetermined intervals, which are transmitted with a transport packet, as the normal-play data;
(b) combining two of said transport packets and appending to each of said two transport packets header information including information representing a point of decoding time and information representing data type, trick mode, program ID and transmission bit rate, to form a reference block consisting of a predetermined number of sync blocks.
(c) extracting the trick-play data from independently decodable frame data supplied at predetermined intervals;
(d) formatting the normal-play data into the aforesaid reference block;
(e) arranging the normal-play data reference blocks formed in said step (d) in a predetermined data structure having a normal-play data region, a trick-play data region and a video auxiliary data region, and appending an outer parity thereto, independently with respect to the trick-play data of said trick-play data region;
(f) arranging said extracted trick-play data in said normal- and trick-play data regions, and appending a trick-outer parity thereto, independently with respect to the video auxiliary data of said video auxiliary data region;
(g) formatting said outer-error-correction-encoded trick-play data and trick-outer parity into said reference block;
(h) arranging said outer-error-correction-encoded normal- play data and the trick-play data reference block and trick-parity reference block formed in said step (g) in said normal- and trick-play data regions, and appending an inner parity thereto; and
(i) recording said inner-error-correction-encoded normal- and trick-play data on a predetermined position of each track on said tape in a reference block unit.

2. A method for recording digital video data as claimed in claim 1, wherein one reference block in said steps (d) and (g) consists of five sync blocks.

3. A method for recording digital video data as claimed in claim 1 or claim 2, wherein said information representing trick mode includes a toggle bit representing a corresponding transport packet of two transport packets and bits representing said trick-play data reference block ID and said trick-parity reference block ID.

4. A method for recording digital video data as claimed in any of the preceding claims, wherein said trick-outer parity appended in said step (f) is constructed in a reference block unit, and a predetermined data pattern is formed with respect to an empty sync block if the five sync blocks of each reference block are not completely filled with trick-parity.

5. A method for recording digital video data as claimed in any of the preceding claims, wherein said normal-play data is outer-error-correction-encoded by replacing the trick-play data of said trick-play data region with a predetermined data pattern in said step (d), and the trick-play data is outer-error-correction-encoded by replacing the video auxiliary data of said video auxiliary data region with a predetermined data pattern in said step (f).

6. A method for recording digital video data as claimed in claim 5, wherein said predetermined data pattern comprises a respective determined number of each byte in the pattern.

7. A method for recording digital video data as claimed in claim 6, wherein the respective predetermined number of each byte in the pattern is the same.

8. A method for recording digital video data as claimed in claim 7, wherein the respective predetermined number for each byte in the pattern is arithmetic zero.

9. A method for reproducing digital video data, wherein said digital video data is descriptive of an ATV or DVB signal that includes independently decodable frame data supplied at predetermined intervals and dependently decodable frame data supplied between said predetermined intervals which are transmitted with a transport packet, two of said transport packets are combined and have appended to each of said two transport packets header information including information representing a point of decoding time and information representing data type, trick mode, program ID and transmission bit rate, to form a reference block consisting of a predetermined number of sync blocks, said trick-play data is extracted from said independently decodable frame data supplied at predetermined intervals, said normal-play data is formatted in said reference block, arranged in normal-play data region of a predetermined data structure having regions for normal-play, trick-play and video auxiliary data and outer-error-correction-encoded exclusive of the trick-play data, said trick-play data is arranged in said normal- and trick-play data regions having said data structure, outer-error-correction-encoded exclusive of the video auxiliary data and then forms said reference block, and said outer-error-correction-encoded normal- and trick-play data are inner-error-correction-encoded and recorded on a predetermined position of the tape in said reference block unit, the method comprising the steps of:
(a') reproducing said inner-error-correction-encoded normal- and trick-play data recorded on said tape in said reference block unit;
(b') forming said reproduced normal- and trick-play data having said data structure and inner-error-correction-decoding said formed normal- and trick-play data;
(c') outer-error-correction-decoding said inner-error-correction-decoded normal-play data during normal mode by replacing the trick-play data of said trick-play data region with a predetermined data pattern;
(d') outputting said outer-error-correction-decoded normal-play data with a transport packet structure during said normal mode;
(e') arranging said inner-error-correction-decoded trick-play data in said normal- and trick-play data regions and outer-error-correction-decoding said inner-error-correction-decoded trick-play data during a trick mode by replacing the video auxiliary data of said video auxiliary data region with a predetermined data pattern; and
(f') outputting said outer-error-correction-decoded trick-play data with the transport packet structure during said trick mode.

10. A method for reproducing digital video data as claimed in claim 9, wherein said predetermined data pattern comprises a respective determined number of each byte in the pattern.

11. A method for reproducing digital video data as claimed in claim 10, wherein the respective predetermined number of each byte in the pattern is the same.

12. A method for reproducing digital video data as claimed in claim 11, wherein the respective predetermined number for each byte in the pattern is arithmetic zero.

13. A method for recording/reproducing digital video data that is generated responsive to an ATV or DVB signal including independently decodable frame data supplied at predetermined intervals and dependently decodable frame data supplied at between said predetermined intervals, said method comprising the steps of:
(a") using independently decodable frame data supplied at predetermined intervals and dependently decodable frame data supplied between said predetermined intervals, which are transmitted with a transport packet, as normal-play data;
(b") combining two of said transport packets and appending to each of said two transport packets header information including information representing a point of decoding time and information representing data type, trick mode, program ID and transmission bit rate, to form a reference block consisting of a predetermined number of sync blocks.
(c") extracting a trick-play data from independently decodable frame data supplied at predetermined intervals;
(d") formatting said normal-play data into the aforesaid reference block;
(e") arranging said normal-play data reference blocks formed in said step (d") in a predetermined data structure having normal-play data region, trick-play data region and video auxiliary data region, replacing the trick-play data of said trick-play data region with a predetermined data pattern, and appending an outer parity thereto, thereby performing outer error-correction encoding;
(f") arranging said extracted trick-play data in said normal- and trick-play data regions, replacing the video auxiliary data of said video auxiliary data region with a predetermined data pattern, and appending a trick-outer parity thereto, thereby performing outer error-correction-encoding;
(g") formatting said outer-error-correction-encoded trick-play data and trick-outer parity into said reference block unit;
(h") arranging said outer-error-correction-encoded normal play data and said formed trick-play data reference block and trick-parity reference block in said normal- and trick-play data regions, and appending an inner parity thereto, thereby performing inner error-correction-encoding;
(i") recording said inner-error-correction-encoded normal- and trick-play data on a predetermined position of each track on said tape in a reference block unit;
(j") reproducing said inner-error-correction-encoded normal- and trick-play data recorded on said tape in said reference block unit;
(k") forming said reproduced normal- and trick-play data having said data structure and inner-error-correction-decoding said formed normal- and trick-play data;
(l") outer-error-correction-decoding said inner-error-correction-decoded normal-play data during normal mode by replacing the trick-play data of said trick-play data region with a predetermined data pattern;
(m") outputting said outer-error-correction-decoded normal-play data with a transport packet structure during said normal mode;
(n") arranging said inner-error-correction-decoded trick-play data in said normal- and trick-play data regions and outer-error-correction-decoding said inner-error-correction-decoded trick-play data during a trick mode by replacing the video auxiliary data of said video auxiliary data region with a predetermined data pattern; and
(o") outputting said outer-error-correction-decoded trick-play data with the transport packet structure during said trick mode.

14. A method for recording/reproducing digital video data as claimed in claim 13, wherein one reference block in said steps (d") and (g") consists of five sync blocks.

15. A method for recording/reproducing digital video data as claimed in claim 13 or 14, wherein the respective predetermined number for each byte in the pattern is arithmetic zero.

16. An apparatus for recording digital video data that is generated responsive to an ATV or DVB signal including independently decodable frame data supplied at predetermined intervals and dependently decodable frame data supplied between said predetermined intervals, wherein said digital video data are classified into normal-play data and trick-play data, said apparatus comprising:
first formatting means (102) for combining two of said transport packets and appending to each of said two transport packets header information including information representing a point of decoding time and information representing data type, trick mode, program ID and transmission bit rate, to form a reference block consisting of a predetermined number of sync blocks and formatting said normal-play data into said reference block;
first outer error-correction encoding means (104) for arranging the normal-play data reference blocks formed in said first formatting means (102) in a predetermined data structure having a normal-play data region, a trick-play data region and a video auxiliary data region, and appending an outer parity thereto, independently with respect to the trick-play data of said trick-play data region;
extracting means (106, 108) for extracting the trick-play data from independently decodable frame data supplied in a predetermined interval;
second outer error-correction encoding means (110) for arranging said extracted trick-play data in said normal-and trick-play data regions, and appending a trick-outer parity thereto, independently with respect to the video auxiliary data of said video auxiliary data region;
second formatting means (112) for forming said outer-error-correction-encoded trick-play data and trick-outer parity into said reference block unit;
inner error-correction encoding means (116) for arranging said outer-error-correction-encoded normal-play data and the trick-play data reference block and trick-parity reference block formed in said second formatting means in said normal- and trick-play data regions, and appending an inner parity thereto; and
recording means (118) for recording said inner-error-correction-encoded normal- and trick-play data on a predetermined position of each track on said tape in a reference block unit.

17. An apparatus for reproducing digital video data, wherein said digital video data is descriptive of an ATV or DVB signal that includes independently decodable frame data supplied at predetermined intervals and dependently decodable frame data supplied between said predetermined intervals, said normal-play data corresponds to said independently decodable frame data supplied at predetermined intervals and said dependently decodable frame data supplied between said predetermined intervals, which are transmitted with a transport packet, two of said transport packets are combined and have appended to each of said two transport packets header information including information representing a point of decoding time and information representing data type, trick mode, program ID and transmission bit rate, to form a reference block consisting of a predetermined number of sync blocks, said trick-play data is a type as extracted from said independently decodable frame data supplied in predetermined intervals, said normal-play data is formatted in said reference block, arranged in the normal-play data region of a predetermined data structure having regions for normal-play, trick-play and video auxiliary data and outer-error-correction-encoded exclusive of the trick-play data, said trick-play data is arranged in said normal- and trick-play data regions having said data structure, outer-error-correction-encoded exclusive of the video auxiliary data and then forms said reference block, and said outer-error-correction encoded normal- and trick-play data are inner-error-correction-encoded and recorded on a predetermined position of the tape in said reference block, said apparatus comprising:
reproducing means (202) for reproducing said inner-error-correction-encoded normal- and trick-play data recorded on said tape in said reference block unit;
inner error-correction decoding means (204) for forming said reproduced normal- and trick-play data and inner-error-correction-decoding said formed normal- and trick-play data;
outer error-correction decoding means (212) for outer-error-correction-decoding said inner-error-correction-decoded normal-play data during normal mode by replacing the trick-play data of said trick-play data region with a predetermined data pattern, and for arranging said inner-error-correction-decoded trick-play data in said normal-and trick-play data regions and then outer-error-correction-decoding said inner-error-correction-decoded trick-play data during a trick mode by replacing the video auxiliary data of said video auxiliary data region with a predetermined data pattern; and
deformatting means (218) for outputting said outer-error-correction-decoded normal-play data with a transport packet structure during said normal mode, and for outputting said outer-error-correction-decoded trick-play data with the transport packet structure during said trick mode.

18. An apparatus for recording/reproducing digital video data that is generated responsive to an ATV or DVB signal including independently decodable frame data supplied at predetermined intervals and dependently decodable frame data supplied between said predetermined intervals, wherein said signal is classified into normal-play data and trick-play data, said apparatus comprising.
first formatting means (102) for combining two of said transport packets and appending to each of said two transport packets header information including information representing a point of decoding time and information representing data type, trick mode, program ID and transmission bit rate, to form a reference block consisting of a predetermined number of sync blocks and formatting said normal-play data into said reference block;
first outer error-correction encoding means (104) for arranging the normal-play data reference blocks formed in said first formatting means (102) in a predetermined data structure having a normal-play data region, a trick-play data region and a video auxiliary data region and appending an outer parity thereto, independently with respect to the trick-play data of said trick-play data region;
extracting means (106, 108) for extracting the trick-play data from independently decodable frame data supplied at predetermined intervals;
second outer error-correction encoding means (110) for arranging said extracted trick-play data in said normal-and trick-play data regions having said data structure and appending a trick-outer parity thereto, independently with respect to the video auxiliary data of said video auxiliary data region;
second formatting means (112) for formatting said outer-error-correction-encoded trick-play data and trick-outer parity into said reference block unit;
inner error-correction encoding means (116) for arranging said outer-error-correction-encoded normal-play data and the trick-play data reference block and trick-parity reference block formed in said second formatting means in said normal- and trick-play data regions, and appending an inner parity thereto;
recording means (118) for recording said inner-error-correction-encoded normal- and trick-play data on a predetermined position of each track on said tape in a reference block unit;
reproducing means (202) for reproducing said inner-error-correction-encoded normal- and trick-play data recorded on said tape in said reference block unit;
inner error-correction decoding means (204) for forming said reproduced normal- and trick-play data having said data structure and inner-error-correction-decoding said formed normal- and trick-play data;
outer error-correction decoding means (212) for outer-error-correction-decoding said inner-error-correction-decoded normal-play data during normal mode by replacing the trick-play data of said trick-play data region with a predetermined data pattern, and for arranging said inner-error-correction-decoded trick-play data in said normal-and trick-play data regions and then outer-error-correction-decoding said inner-error-correction-decoded trick-play data during a trick mode by replacing the video auxiliary data of said video auxiliary data region with a predetermined data pattern; and
deformatting means (218) for outputting said outer-error-correction-decoded normal-play data with a transport packet structure during said normal mode, and for outputting said outer-error-correction-decoded trick-play data with the transport packet structure during said trick mode.

## Patentansprüche

1. Methode zum Aufnehmen digitaler Videodaten, die generiert werden durch Reaktion auf ein ATV- oder DVB-Signal, welches unabhängig dekodierbare Rahmendaten einschließt, die in vorher festgelegten Intervallen geliefert werden und abhängig dekodierbare Rahmendaten, die zwischen besagten vorher festgelegten Intervallen geliefert werden, bei der besagte digitale Videodaten in Normal-Abspieldaten und Spezial-Effekt-Abspieldaten eingeteilt werden, wobei besagte Methode folgende Schritte umfasst:
(a) Verwendung unabhängig dekodierbarer Rahmendaten, die zu vorher festgelegten Intervallen geliefert werden und abhängig dekodierbarer Rahmendaten, die zwischen besagten vorher festgelegten Intervallen geliefert werden, welche mit einem Transportpaket übermittelt werden, als Normal-Abspieldaten;
(b) Verbinden von zwei der besagten Transportpakete und Hinzufügen von Kopfinformationen, die Informationen bezüglich der Dekodierzeit und Informationen bezüglich Datentyp, Spezial-Effekt-Modus, Programm-ID und Übertragungs-Bit-Rate einschließen, zu jedem der beiden besagten Transportpakete, um einen Referenzblock zu bilden, der aus einer vorher festgelegten Anzahl von Sync-Blöcken besteht.
(c) Extrahieren der Spezial-Effekt-Abspieldaten aus unabhängig dekodierbaren Rahmendaten, die zu vorher festgelegten Intervallen geliefert werden;
(d) Formatieren der Normal-Abspieldaten in oben genannten Referenzblock;
(e) Anordnen der Normal-Abspieldaten-Referenzblöcke, die in besagtem Schritt (d) gebildet wurden in eine vorher festgelegte Datenstruktur, die eine Normal-Abspieldaten-Region, eine Spezial-Effekt-Abspieldaten-Region und eine Videohilfsdaten-Region hat und Anhängen einer Außen-Parität an selbige, unabhängig in Bezug auf die Spezial-Effekt-Abspieldaten besagter Spezial-Effekt-Abspieldaten-Region;
(f) Einteilen besagter extrahierter Spezial-Effekt-Abspieldaten in besagte Normal-und Spezial-Effekt-Abspieldaten-Regionen und Anhängen einer Spezial-Effekt-Außen-Parität an selbige, unabhängig in Bezug auf die Videohilfsdaten besagter Vldeo-Hilfsdaten-Region;
(g) Formatieren besagter mit äußerer Fehlerkorrektur kodierter Spezial-Effekt-Abspieldaten und Spezial-Effekt-Außen-Parität in besagten Referenzblock;
(h) Einteilen besagter mit äußerer Fehlerkorrektur kodierter Normal-Abspieldaten und des Spezial-Effekt-Abspieldaten-Referenzblocks sowie des Spezial-Effekt-Parität-Referenzblocks, die in besagtem Schritt (g) formatiert wurden, in besagte Normal- und Spezial-Effekt-Abspieldaten-Regionen und Anhängen einer Innen-Parität an selbige; und
(i) Aufnahme besagter mit innerer Fehlerkorrektur kodierter Normal- und Spezial-Effekt-Abspieldaten auf eine vorher festgelegte Stelle von jeder Spur auf besagter Kassette in eine Referenzblockeinheit.

2. Methode zum Aufnehmen digitaler Videodaten gemäß Anspruch 1, wobei ein Referenzblock bei besagtem Schritt (d) und (g) aus fünf Sync-Blöcken besteht.

3. Methode zum Aufnehmen digitaler Videodaten gemäß Anspruch 1 oder Anspruch 2, wobei besagte Informationen, die den Spezial-Effekt-Modus darstellen, ein Wechsel-Bit einschließen, das ein entsprechendes Transportpaket aus zwei Transportpaketen darstellt und Bits, die besagte Spezial-Effekt-Abspieldaten-Referenzblock-ID und besagte Spezial-Effekt-Parität-Referenzblock-ID darstellen.

4. Methode zum Aufnehmen digitaler Videodaten gemäß allen vorhergehenden Ansprüchen, wobei besagte Spezial-Effekt-Außen-Parität, die in besagtem Schritt (f) angehängt wird, aus einer Referenzblockeinheit gebaut ist, und ein vorher festgelegtes Datenraster bezüglich eines leeren Sync-Blocks gebildet wird, falls die fünf Sync-Blöcke des jeweiligen Referenzblocks nicht vollständig mit Spezial-Effekt-Parität gefüllt sind.

5. Methode zum Aufnehmen digitaler Videodaten gemäß allen vorhergenden Ansprüchen, wobei besagte Normal-Abspieldaten mit äußerer Fehlerkorrektur kodiert werden, indem die Spezial-Effekt-Abspieldaten der besagten Spezial-Effekt-Abspieldaten-Region in besagtem Schritt (d) durch ein vorher festgelegtes Datenraster ersetzt werden, und die Spezial-Effekt-Abspieldaten mit äußerer Fehlerkorrektur kodiert werden, indem die Videohilfsdaten der besagten Videohilfsdaten-Region in besagtem Schritt (f) durch ein vorher festgelegtes Datenraster ersetzt werden.

6. Methode zum Aufnehmen digitaler Videodaten gemäß Anspruch 5, wobei besagtes vorher festgelegtes Datenraster eine entsprechend festgelegte Zahl von jedem Byte im Raster umfaßt.

7. Methode zum Aufnehmen digitaler Videodaten gemäß Anspruch 6, wobei die entsprechend vorher festgelegte Zahl eines jeden Bytes im Raster gleich ist.

8. Methode zum Aufnehmen digitaler Videodaten gemäß Anspruch 7, wobei die entsprechende vorher festgelegte Zahl für jedes Byte im Raster arithmetisch Null ist.

9. Methode zur Wiedergabe digitaler Videodaten, wobei besagte digitale Videodaten ein ATV- oder DVB-Signal beschreiben, das unabhängig dekodierbare Rahmendaten einschließt, die zu vorher festgelegten Intervallen geliefert werden und abhängig dekodierbare Rahmendaten, die zwischen besagten vorher festgesetzten Intervallen geliefert werden, die mit einem Transportpaket übertragen werden, wobei zwei der besagten Transportpakete verbunden sind und wobei an jedes der zwei Transportpakete Kopf-Informationen angehängt sind, die Informationen, die einen Dekodierzeitpunkt darstellen und Informationen, die Datentyp, Spezial-Effekt-Modus, Programm-ID und Übertragungs-Bit-Rate darstellen, einschließen, um einen Referenzblock zu bilden, der aus einer vorher festgelegten Anzahl an Sync-Blöcken besteht, besagte Spezial-Effekt-Abspieldaten werden aus besagten unabhängig dekodierbaren Rahmendaten, die zu vorher festgelegten Intervallen geliefert werden, extrahiert, besagte Normal-Abspieldaten werden in besagten Referenzblock formatiert, zu einer Normal-Abspleldaten-Region mit vorher festgelegter Datenstruktur, die Regionen für Normal-Abspiel-, Spezial-Effekt-Abspiel- und Videohilfsdaten einschließt, angeordnet und bis auf die Spezial-Effekt-Abspieldaten mit äußerer Fehlerkorrektur kodiert, besagte Spezial-Effekt-Abspieldaten werden in besagte Normal- und Spezial-Effekt-Abspieldaten-Regionen mit besagter Datenstruktur eingeteilt, bis auf die Videohilfsdaten mit äußere Fehlerkorrektur kodiert und bilden dann besagten Referenzblock, und besagte mit äußerer Fehlerkorrektur kodierte Normal-und mit innerer Fehlerkorrektur kodierte Spezial-Effekt-Abspieldaten und auf eine vorher festgelegte Stelle der Kassette in besagte Referenzblockeinheit aufgenommen werden, wobei die Methode folgende Schritte umfaßt:
(a') Wiedergabe besagter mit innerer Fehlerkorrektur kodierter Normal- und Spezial-Effekt-Abspieldaten, die auf besagter Kassette in besagte Referenzblockeinheit aufgenommen wurden;
(b') Formatieren besagter wiedergegebener Normal- und Spezial-Effekt-Abspieldaten, die besagte Datenstruktur haben und Dekodieren besagter formatierter Normal- und Spezial-Effekt-Abspieldaten mit innerer Fehlerkorrektur;
(c') Dekodieren mit äußerer Fehlerkorrektur besagter mit innerer Fehlerkorrektur dekodierter Normal-Abspieldaten während des Normal-Modus durch Ersetzen der Spezial-Effekt-Abspieldaten von besagter Spezial-Effekt-Abspieldaten-Region durch ein vorher festgelegtes Datenraster;
(d') Ausgabe besagter mit äußerer Fehlerkorrektur dekodierter Normal-Abspieldaten mit einer Transportpaketstruktur während des Normal-Modus:
(e') Einteilen besagter mit innerer Fehlerkorrektur dekodierter Spezial-Effekt-Abspieldaten in besagte Normal- und Spezial-Effekt-Abspieldaten-Regionen und Dekodieren mit äußerer Fehlerkorrektur besagter mit innerer Fehlerkorrektur dekodierter Spezial-Effekt-Abspieldaten während eines Spezial-Effekt-Modus durch Ersetzen der Videohilfsdaten von besagter Videohilfsdaten-Region durch ein vorher festgelegtes Datenraster; und
(f') Ausgabe besagter mit äußerer Fehlerkorrektur dekodierter Spezial-Effekt-Abspieldaten mit der Transportpaketstruktur während des besagten Spezial-Effekt-Modus.

10. Methode zur Wiedergabe digitaler Videodaten gemäß Anspruch 9, wobei besagtes vorher festgelegtes Datenraster eine entsprechend festgelegte Zahl von jedem Byte im Raster enthält.

11. Methode zur Wiedergabe digitaler Videodaten gemäß Anspruch 10, wobei die entsprechend vorher festgelegte Zahl für jedes Byte im Raster gleich ist.

12. Methode zur Wiedergabe digitaler Videodaten gemäß Anspruch 11, wobei die entsprechend vorher festgelegte Zahl für jedes Byte im Raster arithmetisch Null ist.

13. Methode zur Aufnahme/ Wiedergabe digitaler Videodaten, die generiert werden durch Reaktion auf ein ATV- oder DVB-Signal, das unabhängig dekodierbare Rahmendaten beinhaltet, die zu vorher festgelegten Intervallen geliefert werden und abhängig dekodierbare Rahmendaten, die zwischen besagten vorher festgelegten Intervallen geliefert werden, wobei besagte Methode folgende Schritte beinhaltet:
(a") Verwendung unabhängig dekodierbarer Rahmendaten, die zu vorher festgelegten Intervallen geliefert werden und abhängig dekodierbarer Rahmendaten, die zwischen besagten vorher festgelegten Intervallen geliefert werden und die mittels eines Transportpaketes als Normal-Abspieldaten übertragen werden;
(b") Verknüpfen von zwei der besagten Transportpakete und Anhängen von Kopf-Informationen an jedes der zwei Transportpakete, die Informationen, die einen Dekodierzeitpunkt darstellen und Informationen, die Datentyp, Spezial-Effekt-Modus, Programm-ID und Übertragungs-Bit-Rate darstellen, einschließen, um einen Referenzblock zu bilden, der aus einer vorher festgelegten Anzahl von Sync-Blöcken besteht.
(c") Extrahieren von Speziai-Effekt-Abspieldaten aus unabhängig dekodierbaren Rahmendaten, die zu vorher festgelegten Intervallen geliefert werden;
(d") Formatieren besagter Normal-Abspieldaten in oben genannten Refefenzblock;
(e") Anordnen besagter Normal-Abspieldaten-Referenzblöcke, die in besagtem Schritt (d") in einer vorher festgelegten Datenstruktur, die eine Normaldaten-Region, eine Datenregion für spezielle Effekte und eine Videohilfsdaten-Region besitzt, gebildet werden, Ersetzen der Spezial-Effekt-Abspieldaten von besagter Spezial-Effekt-Abspieldaten-Region durch ein vorher festgelegtes Datenraster und anschließendes Anhängen einer Außen-Parität, wodurch ein Kodieren mit äußerer Fehlerkorrektur durchgeführt wird;
(f") Einteilen besagter extrahierter Spezial-Effekt-Abspieldaten in besagte Normal-und Spezial-Effekt-Abspieldaten-Regionen, Ersetzen der Videohilfsdaten besagter Videohllfsdaten-Region durch ein vorher bestimmtes Datenraster und anschließendes Anhängen einer Spezial-Effekt-Außen-Parität, wodurch ein Kodieren mit äußerer Fehlerkorrektur durchgeführt wird.
(g") Formatieren besagter mit äußerer Fehlerkorrektur kodierter Spezial-Effekt-Abspieldaten und Spezial-Effekt-Außen-Parität in besagte Referenzblockeinheit;
(h") Einteilen besagter mit äußerer Fehlerkorrektur kodierter Normal-Abspieldaten und besagten Spezial-Effekt-Abspieldaten-Referenzblocks und des Spezial-Effekt-Parität-Referenzblocks in besagte Normal- und Spezial-Effekt-Abspieldaten-Regionen und anschließendes Anhängen einer Innen-Parität, wodurch ein Kodieren mit innerer Fehlerkorrektur durchgeführt wird;
(i") Aufnahme besagter mit innerer Fehlerkorrektur kodierter Normal- und Spezial-Effekt-Abspieldaten auf eine vorher festgelegte Stelle von jeder Spur auf besagter Kassette in eine Referenzblockeinheit;
(j") Wiedergabe besagter mit innerer Fehlerkorrektur kodierter Normal- und Spezial-Effekt-Abspieldaten, die auf besagte Kassette in besagter Referenzblockeinheit aufgenommen wurden;
(k") Formatieren besagter wiedergegebener Normal- und Spezial-Effekt-Abspieldaten, die besagte Datenstruktur haben und Dekodieren mit innerer Fehlerkorrektur besagter formatierter Normal- und Spezial-Effekt-Abspieldaten;
(l") Dekodieren mit äußerer Fehlerkorrektur besagter mit innerer Fehlerkorrektur dekodierter Normal-Abspieldaten während des Normalmodus durch Ersetzen der Spezial-Effekt-Abspieldaten besagter Spezial-Effekt-Abspieldaten-Region durch ein vorher festgelegtes Datenraster;
(m") Ausgabe besagter mit äußerer Fehlerkorrektur dekodierter Normal-Abspieldaten während des besagten Normalmodus mit einer Transportpaketstruktur;
(n") Anordnen besagter mit innerer Fehlerkorrektur dekodierter Spezial-Effekt-Abspieldaten in besagten Normal- und Spezial-Effekt-Abspieldaten-Regionen und Dekodieren mit äußerer Fehlerkorrektur besagter mit innerer Fehlerkorrektur dekodierter Spezial-Effekt-Abspieldaten während eines Spezial-Effekt-modus durch Ersetzen der Videohilfsdaten besagter Videohilfsdatenregion durch ein vorher festgelegtes Datenraster; und
(o") Ausgabe besagter mit äußerer Fehlerkorrektur dekodierter Spezial-Effekt-Abspieldaten während des besagten Spezial-Effekt-modus durch die Transportpaketstruktur.

14. Methode zur Aufnahme/ Wiedergabe digitaler Videodaten gemäß Anspruch 13, wobei ein Referenzblock in besagten Schritten (d") und (g") aus fünf Sync-Blöcken besteht.

15. Methode zur Aufnahme/ Wiedergabe digitaler Videodaten gemäß Anspruch 13 oder 14, wobei die entsprechend vorher festgelegte Zahl für jedes Byte im Raster arithmetisch Null ist.

16. Gerät zur Aufnahme digitaler Videodaten, die generiert werden durch Ansprechen auf ein ATV- oder DVB-Signal, das unabhängig dekodierbare Rahmendaten einschließt, die zu vorher festgelegten Intervatlen geliefert werden und abhängig dekodierbare Rahmendaten, die zwischen besagten vorher festgelegten Intervallen geliefert werden, wobei besagte digitale Videodaten in Normal-Abspieldaten und Spezial-Effekt-Abspieldaten eingeteilt werden. Besagtes Gerät umfaßt:
Erste Formatierungsmittel (102) zum Zusammenführen von zwei der besagten Transportpakete und Anhängen von Kopfinformationen, die Informationen über einen Dekodierzeitpunkt und Informationen über Datentyp, Spezial-Effekt-modus, Programm-Kennung und Übertragungs-Bit-Rate beinhalten, an jedes der besagten zwei Transportpakete, um einen Referenzblock zu formatieren, der aus einer vorher festgelegten Anzahl an Sync-Blöcken besteht und zum Formatieren besagter Normal-Abspieldaten in besagten Referenzblock;
Erste Kodiermedien mit äußerer Fehlerkorrektur (104) zum Anordnen der Normal-Abspieldaten-Referenzblöcke, die in besagten ersten Formatierungsmitteln (102) in einer vorher festgelegten Datenstruktur mit einer Normal-Abspieldaten-Region, einer Spezial-Effekt-Abspieldaten-Region und einer Videohilfsdaten-Region formatiert wurden und anschließendes Anhängen einer Außen-Parität, unabhängig in Bezug auf die Spezial-Effekt-Abspieldaten besagter Spezial-Effekt-Abspieldaten-Region;
Extrahiermedien (106, 108) zum Extrahieren der Spezial-Effekt-Abspieldaten aus unabhängig dekodierbaren Rahmendaten, die in einem vorher festgelegten Intervall geliefert werden;
Zweite Kodiermedien mit äußerer Fehlerkorrektur (110) zum Anordnen besagter extrahierter Spezial-Effekt-Abspieldaten in besagten Normal- und Speziai-Effekt-Abspieldaten-Regionen und anschließendes Anhängen einer Spezial-Effekt-Außen-Parität, unabhängig in Bezug auf die Videohilfsdaten besagter Videohilfsdaten-Region;
Zweite Formatierungsmedien (112) zum Formatieren besagter mit äußerer Fehlerkorrektur kodierter Spezial-Effekt-Abspieldaten und Spezial-Effekt-Außen-Parität in besagte Referenzblockeinheit;
Kodiermedien mit innerer Fehlerkorrektur (116) zum Anordnen besagter mit äußerer Fehlerkorrektur kodierter Normal-Abspieldaten, sowie des Spezial-Effekt-Abspieldaten-Referenzblocks und des Spezial-Effekt-Parität-Referenzblocks, die in besagten zweiten Formatierungsmitteln in besagten Normal- und Spezial-Effekt-Abspieldaten-Regionen formatiert werden und anschließendes Anhängen einer inneren Parität; und
Aufnahmemittel (118) zur Aufnahme besagter mit innerer Fehlerkorrektur kodierter Normal- und Spezial-Effekt-Abspieldaten in eine Referenzblockeinheit auf eine vorher festgelegte Stelle von jeder Spur auf besagter Kassette.

17. Gerät zur Wiedergabe digitaler Videodaten, wobei besagte digitale Videodaten auf ein ATV- oder DVB-Signal reagieren, das unabhängig dekodierbare Rahmendaten beinhaltet, die zu vorher festgelegten Intervallen geliefert werden und abhängig dekodierbare Rahmendaten, die zwischen besagten vorher festgelegten Intervallen geliefert werden, wobei besagte Normal-Abspieldaten den besagten unabhängig dekodierbaren Rahmendaten entsprechen, die zu vorher festgelegten Intervallen geliefert werden und den abhängig dekodierbaren Rahmendaten, die zwischen besagten vorher festgelegten Intervallen geliefert werden, die mit einem Transportpaket übertragen werden, wobei zwei der besagten Transportpakete zusammengeführt werden und an jedes der besagten zwei Transportpakete Kopfinformationen angehängt werden, die Informationen über einen Dekodierzeitpunkt sowie Informationen über Datentyp, Spezial-Effekt-modus, Programm-Kennung und Übertragungs-Bit-Rate beinhalten, um einen Referenzblock zu bilden, der aus einer vorher festgelegten Anzahl von Sync-Blöcken besteht, wobei besagte Spezial-Effekt-Abspieldaten einen Typ darstellen, der dem aus besagten unabhängig dekodierbaren Rahmendaten, die in vorher festgelegten Intervallen geliefert werden, extrahierten entspricht, wobei besagte Normal-Abspieldaten in besagten Referenzblock formatiert werden, in der Normal-Abspieldaten-Region einer vorher festgelegten Datenstruktur, die Regionen für Normal-Abspiel, Abspielen von Daten für spezielle Effekte und Videohilfsdaten sowie abgesehen von den Spezial-Effekt-Abspieldaten mit äußerer Fehlerkorrektur kodierte Regionen hat, angeordnet werden, wobei besagte Spezial-Effekt-Abspieldaten in besagten Normal- und Spezial-Effekt-Abspiel-Regionen mit besagter Datenstruktur, die abgesehen von den Videohilfsdaten mit äußerer Fehlerkorrektur kodiert sind, angeordnet sind und dann besagten Referenzblock bilden, wobei besagte mit äußerer Fehlerkorrektur kodierte Normal- und Spezial-Effekt-Abspieldaten mit innerer Fehlerkorrektur kodiert werden und auf eine vorher festgelegte Stelle der Kassette in besagten Referenzblock aufgenommen werden, wobei besagtes Gerät folgendes umfaßt:
Wiedergabemedium (202) zur Wiedergabe besagter mit innerer Fehlerkorrektur kodierter Normal- und Spezial-Effekt-Abspieldaten, die auf besagter Kassette in besagte Referenzblockeinheit aufgenommen werden;
Dekodiermedium mit innerer Fehlerkorrektur (204) zum Formatieren besagter wiedergegebener Normal- und Spezial-Effekt-Abspieldaten und Dekodieren mit innerer Fehlerkorrektur besagter formatierter Normal- und Spezial-Effekt-Abspieldaten;
Dekodiermedium mit äußerer Fehlerkorrektur (212) zum Dekodieren besagter mit innerer Fehlerkorrektur dekodierter Normal-Abspieldaten mit äußerer Fehlerkorrektur während des Normalmodus durch Ersetzen der Spezial-Effekt-Abspieldaten besagter Spezial-Effekt-Abspleldaten-Region durch ein vorher festgelegtes Raster und zum Anordnen von besagten mit innerer Fehlerkorrektur dekodierten Spezial-Effekt-Abspieldaten in besagten Normal- und Spezial-Effekt-Abspieldaten-Regionen und danach zum Dekodieren mit äußerer Fehlerkorrektur besagter mit innerer Fehlerkorrektur dekodierter Spezial-Effekt-Abspieldaten während eines Spezial-Effekt-Modus durch Ersetzen der Videohilfsdaten von besagter Vidohilfsdaten-Region durch ein vorher festgelegtes Datenraster; und
Deformatierungsmedium (218) zur Ausgabe besagter mit äußerer Fehlerkorrektur dekodierter Normal-Abspieldaten mit einer Transportpaketstruktur während des besagten Normalmodus und zur Ausgabe besagter mit äußerer Fehlerkorrektur dekodierter Spezlal-Effekt-Abspieldaten mit der Transportpaketstruktur während des besagten Spezial-Effekt-Modus.

18. Gerät zur Aufnahme/ Wiedergabe digitaler Videodaten, die durch Reaktion auf ein ATV- oder DVB-Signal generiert werden, das unabhängig dekodierbare Rahmendaten enthält, die zu vorher festgelegten Intervallen geliefert werden und abhängig dekodierbare Rahmendaten, die zwischen besagten vorher festgelegten Intervallen geliefert werden, wobei sich besagtes Signal aufteilt in Normal-Abspieldaten und Spezial-Effekt-Abspieldaten, und wobei das Gerät folgendes beinhaltet:
Erste Formatierungsmittel (102) zum Zusammenführen von zwei der besagten Transportpakete und Anhängen von Kopfinformationen, die Informationen über einen Dekodierzeitpunkt und Informationen über Datentyp, Spezial-Effekt-Modus, Programm-Kennung und Übertragungs-Bit-Rate beinhalten, an jedes der besagten zwei Transportpakete, um einen Referenzblock zu formatieren, der aus einer vorher festgelegten Anzahl an Sync-Blöcken besteht und Formatieren besagter Normal-Abspieldaten in besagten Referenzblock;
Erste Kodiermittel mit äußerer Fehlerkorrektur (104) zum Anordnen der Normal-Abspieldaten-Referenzblöcke, die in besagten ersten Formatierungsmitteln (102) in einer vorher festgelegten Datenstruktur mit einer Normal-Abspieldaten-Region, einer Spezial-Effekt-Abspieldaten-Region und einer Videohilfsdaten-Region formatiert werden und anschließendes Anhängen einer Außen-Parität, unabhängig in Bezug auf die Spezial-Effekt-Abspieldaten besagter Spezial-Effekt-Abspieldaten-Region;
Extrahiermittel (106, 108) zum Extrahieren der Spezial-Effekt-Abspieldaten aus unabhängig dekodierbaren Rahmendaten, die in vorher festgelegten Intervallen geliefert werden;
Zweite Kodiermittel mit äußerer Fehlerkorrektur (110) zum Anordnen besagter extrahierter Spezial-Effekt-Abspieldaten in besagten Normal- und Spezlal-Effekt-Abspieldaten-Regionen und anschließendes Anhängen einer Spezial-Effekt-Außen-Parität, unabhängig in Bezug auf die Videohilfsdaten besagter Videohilfsdaten-Region;
Zweite Formatierungsmittel (112) zum Formatieren besagter mit äußerer Fehlerkorrektur kodierter Spezial-Effekt-Abspieldaten und Spezial-Effekt-Außen-Parität in besagte Referenzblockeinheit;
Kodiermittel mit nnerer Fehlerkorrektur (116) zum Anordnen besagter mit äußerer Fehlerkorrektur kodierter Normal-Abspieldaten, sowie des Spezial-Effekt-Abspieldaten-Referenzblocks und des Spezial-Effekt-Parität-Referenzblocks, die in besagten zweiten Formatierungsmitteln in besagten Normal- und Spezial-Effekt-Abspieldaten-Regionen formatiert werden und anschließendes Anhängen einer inneren Parität; und
Aufnahmemittel (118) zur Aufnahme besagter mit innerer Fehlerkorrektur kodierter Normal- und Spezial-Effekt-Abspieldaten in eine Referenzblockeinheit auf eine vorher festgelegte Stelle von jeder Spur auf besagter Kassette.
Wiedergabemittel (202) zur Wiedergabe besagter mit innerer Fehlerkorrektur kodierter Normal- und Spezial-Effekt-Abspieldaten, die auf besagter Kassette in besagte Referenzblockeinheit aufgenommen werden;
Dekodiermittel mit äußerer Fehlerkorrektur (212) zum Dekodieren mit äußerer Fehlerkorrektur besagter mit innerer Fehlerkorrektur dekodierter Normal-Abspieldaten während des Normalmodus durch Ersetzen der Spezial-Effekt-Abspieldaten von besagter Spezial-Effekt-Abspieldaten-Region durch ein vorher festgelegtes Datenraster und zum Anordnen besagter mit innerer Fehlerkorrektur Spezial-Effekt-Abspleldaten in besagten Normal- und Spezial-Effekt-Abspieldaten-Regionen und anschließendes Dekodieren mit äußerer Fehlerkorrektur besagter mit innerer Fehlerkorrektur dekodierter Spezial-Effekt-Abspieldaten während eines Spezial-Effekt-Modus durch Ersetzen der Videohilfsdaten von besagter Videohilfsdaten-Region durch ein vorher festgelegtes Datenraster; und
Deformatierungsmittel (218) zur Ausgabe besagter mit äußerer Fehlerkorrektur dekodierter Normal-Abspieldaten mit einer Transportpaketstruktur währen des besagten Normalmodus und zur Ausgabe besagter mit äußerer Fehlerkorrektur dekodierter Spezial-Effekt-Abspieldaten mit der Transportpaketstruktur während des besagten Spezial-Effekt-Modus.

## Revendications

1. Procédé pour enregistrer des données vidéo numériques générées en réponse à un signal ATV ou DVB qui inclut des données de trame décodables d'une manière indépendante délivrées à des intervalles prédéterminés et des données de trame décodables d'une manière dépendante délivrées entre lesdits intervalles prédéterminés, dans lequel lesdites données vidéo numériques sont classées en données à lecture normale et en données à lecture truquée, ledit procédé comportant les étapes consistant à :
(a) utiliser des données de trame décodables d'une manière indépendante délivrées à des intervalles prédéterminés et des données de trame décodables d'une manière dépendante délivrées entre lesdits intervalles prédéterminés, qui sont transmises à l'aide d'un paquet de transport, en tant que données à lecture normale,
(b) combiner deux paquets parmi lesdits paquets de transport et annexer à chacun desdits deux paquets de transport des informations d'en-tête incluant des informations représentant un point d'instant de décodage et des informations représentant le type de données, le mode de trucage, l'identificateur (ID) de programme et le débit binaire de transmission, pour former un bloc de référence constitué d'un nombre prédéterminé de blocs de synchronisation,
(c) extraire les données à lecture truquée à partir des données de trame décodables d'une manière indépendante délivrées à des intervalles prédéterminés,
(d) formater les données à lecture normale sous la forme du bloc de référence mentionné ci-dessus,
(e) agencer les blocs de référence des données à lecture normale formés à ladite étape (d) dans une structure de données prédéterminée ayant une zone de données à lecture normale, une zone de données à lecture truquée et une zone de données auxiliaires vidéo, et annexer à celles-ci une parité externe, d'une manière indépendante par rapport aux données à lecture truquée de ladite zone de données à lecture truquée,
(f) agencer lesdites données à lecture truquée extraites dans lesdites zones de données à lecture normale et à lecture truquée, et annexer à celles-ci une parité de trucage externe, d'une manière indépendante par rapport aux données auxiliaires vidéo de ladite zone de données auxiliaires vidéo,
(g) formater lesdites données à lecture truquée ayant subi un codage de correction d'erreur externe et ladite parité de trucage externe sous la forme dudit bloc de référence,
(h) agencer lesdites données à lecture normale ayant subi un codage de correction d'erreur externe et le bloc de référence des données à lecture truquée et le bloc de référence à parité de trucage formé à ladite étape (g) dans lesdites zones de données à lecture normale et à lecture truquée, et annexer à celles-ci une parité interne, et
(i) enregistrer lesdites données à lecture normale et à lecture truquée ayant subi un codage de correction d'erreur interne à une position prédéterminée de chaque piste de ladite bande dans une unité de bloc de référence.

2. Procédé pour enregistrer des données vidéo numériques selon la revendication 1, dans lequel un bloc de référence desdites étapes (d) et (g) est constitué de cinq blocs de synchronisation.

3. Procédé pour enregistrer des données vidéo numériques selon la revendication 1 ou la revendication 2, dans lequel lesdites informations représentant le mode de trucage incluent un bit à bascule représentant un paquet de transport correspondant de deux paquets de transport et des bits représentant l'identificateur (ID) dudit bloc de référence à lecture truquée et l'identificateur (ID) dudit bloc de référence à parité de trucage.

4. Procédé pour enregistrer des données vidéo numériques selon l'une quelconque des revendications précédentes, dans lequel ladite parité de trucage externe annexée à ladite étape (f) est conçue dans une unité de bloc de référence, et un motif de données prédéterminé est formé par rapport à un bloc de synchronisation vide si les cinq blocs de synchronisation de chaque bloc de référence ne sont pas complètement remplis de parité de trucage.

5. Procédé pour enregistrer des données vidéo numériques selon l'une quelconque des revendications précédentes, dans lequel lesdites données à lecture normale subissent un codage de correction d'erreur externe en remplaçant les données à lecture truquée de ladite zone de données à lecture truquée par un motif de données prédéterminé à ladite étape (d), et les données à lecture truquée subissent un codage de correction d'erreur externe en remplaçant les données auxiliaires vidéo de ladite zone de données auxiliaires vidéo par un motif de données prédéterminé à ladite étape (f).

6. Procédé pour enregistrer des données vidéo numériques selon la revendication 5, dans lequel ledit motif de données prédéterminé comporte un nombre déterminé respectif de chaque octet du motif.

7. Procédé pour enregistrer des données vidéo numériques selon la revendication 6, dans lequel le nombre prédéterminé respectif de chaque octet du motif est identique.

8. Procédé pour enregistrer des données vidéo numériques selon la revendication 7, dans lequel le nombre prédéterminé respectif pour chaque octet du motif est un zéro arithmétique.

9. Procédé pour lire des données vidéo numériques, dans lequel lesdites donnée vidéo numériques sont descriptives d'un signal ATV ou DVB qui inclut des données de trame décodables d'une manière indépendante délivrées à des intervalles prédéterminés et des données de trame décodables d'une manière dépendante délivrées entre lesdits intervalles prédéterminés qui sont transmises à l'aide d'un paquet de transport, deux desdits paquets de transport sont combinés et à chacun desdits deux paquets de transport sont annexées des informations d'en-tête incluant des informations représentant un point d'instant de décodage et des informations représentant le type de données, le mode de trucage, l'identificateur de programme et le débit binaire de transmission, pour former un bloc de référence constitué d'un nombre prédéterminé de blocs de synchronisation, lesdites données à lecture truquée sont extraites à partir desdites données de trame décodables d'une manière indépendante délivrées à des intervalles prédéterminés, lesdites données à lecture normale sont formatées sous la forme dudit bloc de référence, agencées dans une zone de données à lecture normale d'une structure de données prédéterminée ayant des zones destinées à des données à lecture normale, des données à lecture truquée et des données auxiliaires vidéo et ayant subi un codage de correction d'erreur externe à l'exception des données à lecture truquée, lesdites données à lecture truquée sont agencées dans lesdites zones de données à lecture normale et à lecture truquée ayant ladite structure de données, ayant subi un codage de correction d'erreur externe à l'exception des données auxiliaires vidéo et forment ensuite ledit bloc de référence, et lesdites données à lecture normale et à lecture truquée ayant subi un codage de correction d'erreur externe subissent un codage de correction d'erreur interne et sont enregistrées à une position prédéterminée de la bande dans ladite unité de bloc de référence, le procédé comportant les étapes consistant à :
(a') lire lesdites données à lecture normale et à lecture truquée ayant subi un codage de correction d'erreur interne enregistrées sur ladite bande dans ladite unité de bloc de référence,
(b') former lesdites données à lecture normale et à lecture truquée lues ayant ladite structure de données et effectuer un décodage de correction d'erreur interne desdites données à lecture normale et à lecture truquée formées,
(c') effectuer un décodage de correction d'erreur externe desdites données à lecture normale ayant subi un décodage de correction d'erreur interne pendant le mode normal en remplaçant les données à lecture truquée de ladite zone de données à lecture truquée par un motif de données prédéterminé,
(d') délivrer en sortie lesdites données à lecture normale ayant subi un décodage de correction d'erreur externe ayant une structure de paquets de transport pendant ledit mode normal,
(e') agencer lesdites données à lecture truquée ayant subi un décodage de correction d'erreur interne dans lesdites zones de données à lecture normale et à lecture truquée et effectuer un décodage de correction d'erreur externe desdites données à lecture truquée ayant subi un décodage de correction d'erreur interne pendant un mode de trucage en remplaçant les données auxiliaires vidéo de ladite zone de données auxiliaires vidéo par un motif de données prédéterminé, et
(f') délivrer en sortie lesdites données à lecture truquée ayant subi un décodage de correction d'erreur externe ayant la structure de paquets de transport pendant ledit mode de trucage.

10. Procédé pour lire des données vidéo numériques selon la revendication 9, dans lequel ledit motif de données prédéterminé comporte un nombre déterminé respectif de chaque octet du motif.

11. Procédé pour lire des données vidéo numériques selon la revendication 10, dans lequel le nombre prédéterminé respectif de chaque octet du motif est identique.

12. Procédé pour lire des données vidéo numériques selon la revendication 11, dans lequel le nombre prédéterminé respectif pour chaque octet du motif est un zéro arithmétique.

13. Procédé pour enregistrer/lire des données vidéo numériques qui sont générées en réponse à un signal ATV ou DVB incluant des données de trame décodables d'une manière indépendante délivrées à des intervalles prédéterminés et des données de trame décodables d'une manière dépendante délivrées entre lesdits intervalles prédéterminés, ledit procédé comportant les étapes consistant à :
(a") utiliser des données de trame décodables d'une manière indépendante délivrées à des intervalles prédéterminés et des données de trame décodables d'une manière dépendante délivrées entre lesdits intervalles prédéterminés, qui sont transmises à l'aide d'un paquet de transport, en tant que données à lecture normale,
(b") combiner deux paquets parmi lesdits paquets de transport et annexer à chacun desdits deux paquets de transport des informations d'en-tête incluant des informations représentant un point d'instant de décodage et des informations représentant le type de données, le mode de trucage, l'identificateur de programme et le débit binaire de transmission, pour former un bloc de référence constitué d'un nombre prédéterminé de blocs de synchronisation,
(c") extraire des données à lecture truquée à partir des données de trame décodables d'une manière indépendante délivrées à des intervalles prédéterminés,
(d") formater lesdites données à lecture normale sous la forme du bloc de référence mentionné ci-dessus,
(e") agencer lesdits blocs de référence des données à lecture normale formés à ladite étape (d") dans une structure de données prédéterminée ayant une zone de données à lecture normale, une zone de données à lecture truquée et une zone de données auxiliaires vidéo, remplacer les données à lecture truquée de ladite zone de données à lecture truquée par un motif de données prédéterminé, et annexer à celles-ci une parité externe, effectuant ainsi un codage de correction d'erreur externe,
(f") agencer lesdites données à lecture truquée extraites dans lesdites zones de données à lecture normale et à lecture truquée, remplacer les données auxiliaires vidéo de ladite zone de données auxiliaires vidéo par un motif de données prédéterminé, et annexer à celles-ci une parité de trucage externe, effectuant ainsi un codage de correction d'erreur externe,
(g") formater lesdites données à lecture truquée ayant subi un codage de correction d'erreur externe et la parité de trucage externe sous la forme de ladite unité de bloc de référence,
(h") agencer lesdites données à lecture normale ayant subi un codage de correction d'erreur externe et ledit bloc de référence de données à lecture truquée formé et le bloc de référence de parité de trucage dans lesdites zones de données à lecture normale et à lecture truquée, et annexer à celles-ci une parité interne, effectuant ainsi un codage de correction d'erreur interne,
(i") enregistrer lesdites données à lecture normale et à lecture truquée ayant subi un codage de correction d'erreur interne à une position prédéterminée de chaque piste sur ladite bande dans une unité de bloc de référence,
(j") lire lesdites données à lecture normale et à lecture truquée ayant subi un codage de correction d'erreur interne enregistrées sur ladite bande dans ladite unité de bloc de référence,
(k") former lesdites données à lecture normale et à lecture truquée lues ayant ladite structure de données et effectuer un décodage de correction d'erreur interne desdites données à lecture normale et à lecture truquée formées,
(l") effectuer un décodage de correction d'erreur externe desdites données à lecture normale ayant subi un décodage de correction d'erreur interne pendant le mode normal en remplaçant les données à lecture truquée de ladite zone de données à lecture truquée par un motif de données prédéterminé,
(m") délivrer en sortie lesdites données à lecture normale ayant subi un décodage de correction d'erreur externe ayant une structure de paquets de transport pendant ledit mode normal,
(n") agencer lesdites données à lecture truquée ayant subi un décodage de correction d'erreur interne dans lesdites zones de données à lecture normale et à lecture truquée et effectuer un décodage de correction d'erreur externe desdites données à lecture truquée ayant subi un décodage de correction d'erreur interne pendant un mode de trucage en remplaçant les données auxiliaires vidéo de ladite zone de données auxiliaires vidéo par un motif de données prédéterminé, et
(o") délivrer en sortie lesdites données à lecture truquée ayant subi un décodage de correction d'erreur externe ayant la structure de paquets de transport pendant ledit mode de trucage.

14. Procédé pour enregistrer/lire des données vidéo numériques selon la revendication 13, dans lequel un bloc de référence dans lesdites étapes (d") et (g") est constitué de cinq blocs de synchronisation.

15. Procédé pour enregistrer/lire des données vidéo numériques selon la revendication 13 ou 14, dans lequel le nombre prédéterminé respectif pour chaque octet du motif est un zéro arithmétique.

16. Dispositif pour enregistrer des données vidéo numériques qui sont générées en réponse à un signal ATV ou DVB incluant des données de trame décodables d'une manière indépendante délivrées à des intervalles prédéterminés et des données de trame décodables d'une manière dépendante délivrées entre lesdits intervalles prédéterminés, dans lequel lesdites données vidéo numériques sont classées en données à lecture normale et en données à lecture truquée, ledit dispositif comportant :
des premiers moyens de formatage (102) pour combiner deux paquets parmi lesdits paquets de transport et annexer à chacun desdits deux paquets de transport des informations d'en-tête incluant des informations représentant un point d'instant de décodage et des informations représentant le type de données, le mode de trucage, l'identificateur de programme et le débit binaire de transmission, pour former un bloc de référence constitué d'un nombre prédéterminé de blocs de synchronisation, et formater lesdites données à lecture normale sous la forme dudit bloc de référence,
des premiers moyens de codage de correction d'erreur externe (104) pour agencer les blocs de référence des données à lecture normale formés dans lesdits premiers moyens de formatage (102) dans une structure de données prédéterminée ayant une zone de données à lecture normale, une zone de données à lecture truquée et une zone de données auxiliaires vidéo, et annexer à celles-ci une parité externe, d'une manière indépendante par rapport aux données à lecture truquée de ladite zone de données à lecture truquée,
des moyens d'extraction (106, 108) pour extraire les données à lecture truquée à partir des données de trame décodables d'une manière indépendante délivrées pendant un intervalle prédéterminé,
des seconds moyens de codage de correction d'erreur externe (110) pour agencer lesdites données à lecture truquée extraites dans lesdites zones de données à lecture normale et à lecture truquée, et annexer à celles-ci une parité de trucage externe, d'une manière indépendante par rapport aux données auxiliaires vidéo de ladite zone de données auxiliaires vidéo,
des seconds moyens de formatage (112) pour former lesdites données à lecture truquée ayant subi un codage de correction d'erreur externe et la parité de trucage externe dans ladite unité de bloc de référence,
des moyens de codage de correction d'erreur interne (116) pour agencer lesdites données à lecture normale ayant subi un codage de correction d'erreur externe et le bloc de référence de données à lecture truquée et le bloc de référence à parité truquée formé dans lesdits seconds moyens de formatage dans lesdites zones de données à lecture normale et à lecture truquée, et annexer à celles-ci une parité interne, et
des moyens d'enregistrement (118) pour enregistrer lesdites données à lecture normale et à lecture truquée ayant subi un codage de correction d'erreur interne à une position prédéterminée de chaque piste sur ladite bande dans une unité de bloc de référence.

17. Dispositif pour lire des données vidéo numériques, lesdites données vidéo numériques étant descriptives d'un signal ATV ou DVB qui inclut des données de trame décodables d'une manière indépendante délivrées à des intervalles prédéterminés et des données de trame décodables d'une manière dépendante délivrées entre lesdits intervalles prédéterminés, lesdites données à lecture normale correspondant auxdites données de trame décodables d'une manière indépendante délivrées à des intervalles prédéterminés et auxdites données de trame décodables d'une manière dépendante délivrées entre lesdits intervalles prédéterminés, qui sont transmises à l'aide d'un paquet de transport, deux paquets parmi lesdits paquets de transport sont combinés et à chacun des deux paquets de transport sont annexées des informations d'en-tête incluant des informations représentant un point de l'instant de décodage et des informations représentant le type de données, le mode de trucage, l'identificateur de programme et le débit binaire de transmission, pour former un bloc de référence constitué d'un nombre prédéterminé de blocs de synchronisation, lesdites données à lecture truquée ont un type lorsqu'elles sont extraites à partir desdites données de trame décodables d'une manière indépendante délivrées à des intervalles prédéterminés, lesdites données à lecture normale sont formatées dans ledit bloc de référence, agencées dans la zone de données à lecture normale d'une structure de données prédéterminée ayant des zones destinées à des données à lecture normale, des données à lecture truquée et des données auxiliaires vidéo et ayant subi un codage de correction d'erreur externe à l'exception des données à lecture truquée, lesdites données à lecture truquée sont agencées dans lesdites zones de données à lecture normale et à lecture truquée ayant ladite structure de données, ayant subi un codage de correction d'erreur externe à l'exception des données auxiliaires vidéo et forment ensuite ledit bloc de référence, et lesdites données à lecture normale et à lecture truquée ayant subi un codage de correction d'erreur externe subissent un codage de correction d'erreur interne et sont enregistrées à une position prédéterminée de la bande dans ledit bloc de référence, le dispositif comportant :
des moyens de lecture (202) pour lire lesdites données à lecture normale et à lecture truquée ayant subi un codage de correction d'erreur interne enregistrées sur ladite bande dans ladite unité de bloc de référence,
des moyens de décodage de correction d'erreur interne (204) pour former lesdites données à lecture normale et à lecture truquée lues et effectuer un décodage de correction d'erreur interne desdites données à lecture normale et à lecture truquée formées,
des moyens de décodage de correction d'erreur externe (212) pour effectuer un décodage de correction d'erreur externe desdites données à lecture normale ayant subi un décodage de correction d'erreur interne pendant le mode normal en remplaçant les données à lecture truquée de ladite zone de données à lecture truquée par un motif de données prédéterminé, et pour agencer lesdites données à lecture truquée ayant subi un décodage de correction d'erreur interne dans lesdites zones de données à lecture normale et à lecture truquée et effectuer ensuite un décodage de correction d'erreur externe desdites données à lecture truquée ayant subi un décodage de correction d'erreur interne pendant un mode de trucage en remplaçant les données auxiliaires vidéo de ladite zone de données auxiliaires vidéo par un motif de données prédéterminé, et
des moyens de déformatage (218) pour délivrer en sortie lesdites données à lecture normale ayant subi un décodage de correction d'erreur externe ayant une structure de paquets de transport pendant ledit mode normal, et pour délivrer en sortie lesdites données à lecture truquée ayant subi un décodage de correction d'erreur externe ayant la structure de paquets de transport pendant ledit mode de trucage.

18. Dispositif pour enregistrer/lire des données vidéo numériques qui sont générées en réponse à un signal ATV ou DVB incluant des données de trame décodables d'une manière indépendante délivrées à des intervalles prédéterminés et des données de trame décodables d'une manière dépendante délivrées entre lesdits intervalles prédéterminés, dans lequel ledit signal est classé en données à lecture normale et données à lecture truquée, ledit dispositif comportant :
des premiers moyens de formatage (102) pour combiner deux desdits paquets de transport et annexer à chacun desdits deux paquets de transport des informations d'en-tête incluant des informations représentant un point d'instant de décodage et des informations représentant le type de données, le mode de trucage, l'identificateur de programme et le débit binaire de transmission, pour former un bloc de référence constitué d'un nombre prédéterminé de blocs de synchronisation et formater lesdites données à lecture normale dans ledit bloc de référence,
des premiers moyens de codage de correction d'erreur externe (104) pour agencer les blocs de référence des données à lecture normale formés dans lesdits premiers moyens de formatage (102) dans une structure de données prédéterminée ayant une zone de données à lecture normale, une zone de données à lecture truquée et une zone de données auxiliaires vidéo et annexer à celles-ci une parité externe, d'une manière indépendante par rapport aux données à lecture truquée de ladite zone de données à lecture truquée,
des moyens d'extraction (106, 108) pour extraire les données à lecture truquée à partir des données de trame décodables d'une manière indépendante délivrées à des intervalles prédéterminés,
des seconds moyens de codage de correction d'erreur externe (110) pour agencer lesdites données à lecture truquée extraites dans lesdites zones de données à lecture normale et à lecture truquée ayant ladite structure de données et annexer à celles-ci une parité de trucage externe, d'une manière indépendante par rapport aux données auxiliaires vidéo de ladite zone de données auxiliaires vidéo,
des seconds moyens de formatage (112) pour formater lesdites données à lecture truquée ayant subi un codage de correction d'erreur externe et la parité de trucage externe dans ladite unité de bloc de référence,
des moyens de codage de correction d'erreur interne (116) pour agencer lesdites données à lecture normale ayant subi un codage de correction d'erreur externe et le bloc de référence de données à lecture truquée et le bloc de référence à parité de trucage formé dans lesdits seconds moyens de formatage dans lesdites zones de données à lecture normale et à lecture truquée, et annexer à celles-ci une parité interne,
des moyens d'enregistrement (118) pour enregistrer lesdites données à lecture normale et à la lecture truquée ayant subi un codage de correction d'erreur interne à une position prédéterminée de chaque piste sur ladite bande dans une unité de bloc de référence,
des moyens de lecture (202) pour lire lesdites données à lecture normale et à lecture truquée ayant subi un codage de correction d'erreur interne enregistrées sur ladite bande dans ladite unité de bloc de référence,
des moyens de décodage de correction d'erreur interne (204) pour former lesdites données à lecture normale et à lecture truquée lues ayant ladite structure de données et effectuer un décodage de correction d'erreur interne desdites données à lecture normale et à lecture truquée formées,
des moyens de décodage de correction d'erreur externe (212) pour effectuer un décodage de correction d'erreur externe desdites données à lecture normale ayant subi un décodage de correction d'erreur interne pendant le mode normal en remplaçant les données à lecture truquée de ladite zone de données à lecture truquée par un motif de données prédéterminé, et pour agencer lesdites données à lecture truquée ayant subi un décodage de correction d'erreur interne dans lesdites zones de données à lecture normale et à lecture truquée et effectuer ensuite un décodage de correction d'erreur externe desdites données à lecture truquée ayant subi un décodage de correction d'erreur interne pendant un mode de trucage en remplaçant les données auxiliaires vidéo de ladite zone de données auxiliaires vidéo par un motif de données prédéterminé, et
des moyens de déformatage (218) pour délivrer en sortie lesdites données à lecture normale ayant subi un décodage de correction d'erreur externe ayant une structure de paquets de transport pendant ledit mode normal, et pour délivrer en sortie lesdites données à lecture truquée ayant subi un décodage de correction d'erreur externe ayant la structure de paquets de transport pendant ledit mode de trucage.
